# EUROPÄISCHE PATENTSCHRIFT

(11) **EP 0 951 343 B1**
(45) Veröffentlichungstag und Bekanntmachung des Hinweises auf die Patenterteilung: **20.03.2002**
(21) Anmeldenummer: 97948813.7
(22) Anmeldetag: 27.10.1997
(51) Int. Cl.: B01D 63/00, B01D 63/06, B01D 63/08, B01D 69/02

(54) **MEMBRANMODUL ZUR STOFFSPEZIFISCHEN FLUIDBEHANDLUNG**
MEMBRANE MODULE FOR SUBSTANCE-SPECIFIC FLUID TREATMENT
MODULE MEMBRANAIRE POUR TRAITEMENT FLUIDIQUE SPECIFIQUE

(30) Priorität: 06.11.1996 DE 19645738
(43) Veröffentlichungstag der Anmeldung: 27.10.1999
(73) Patentinhaber: MAT Adsorption Technologies GmbH & Co. KG, 42103 Wuppertal (DE)
(72) Erfinder: BAURMEISTER, Ulrich, D-42115 Wuppertal (DE); WOLLBECK, Rudolf, D-63906 Erlenbach (DE)
(74) Vertreter: Fett, Günter
(86) Internationale Anmeldenummer: EP9705927
(87) Internationale Veröffentlichungsnummer: WO9819777

(56) Entgegenhaltungen:
- EP-A- 0 283 826
- DE-A- 2 926 434
- DE-A- 3 302 384
- GB-A- 1 221 994
- US-A- 4 935 142

## Beschreibung

Die Erfindung betrifft eine Vorrichtung zur stoffspezifischen Behandlung eines Fluids, enthaltend
a) ein Gehäuse,
b) eine Einlaßeinrichtung zum Einleiten des zu behandelnden Fluids in das Gehäuse in einen Verteilerraum,
c) eine Auslaßeinrichtung zum Ableiten des behandelten Fluids aus dem Gehäuse aus einem Sammelraum,
d) mindestens ein erstes Behandlungselement und mindestens ein zweites Behandlungselement zur stoffspezifischen Behandlung des Fluids, wobei jedes Behandlungselement ein der Einlaßeinrichtung zugewandtes Ende und ein der Auslaßeinrichtung zugewandtes Ende aufweist,
wobei das mindestens eine erste Behandlungselement mindestens einen durch seine Wände gebildeten, in Richtung der Einlaßeinrichtung geöffneten und in Richtung der Auslaßeinrichtung geschlossenen Hohlraum aufweist und das mindestens eine zweite Behandlungselement mindestens einen durch seine Wände gebildeten, in Richtung der Auslaßeinrichtung geöffneten und in Richtung der Einlaßeinrichtung geschlossenen Hohlraum aufweist und
wobei die Wände der Behandlungselemente zumindest teilweise aus mindestens einer semipermeablen Membran mit einer porösen Struktur gebildet sind, ein Verfahren zur stoffspezifischen Behandlung eines Fluids sowie die Verwendung der Vorrichtung.

Unter Fluiden im Sinne der vorliegenden Erfindung werden Gase, Gasgemische, mit Partikeln beladene Gase sowie allgemein Flüssigkeiten wie z.B. klare Lösungen oder Suspensionen verstanden.

Stoffspezifische Behandlungen von Fluiden gewinnen in zunehmendem Maße an Bedeutung in Anwendungsgebieten wie der Biotechnologie, der Medizin oder der chemischen Technologie. Beispiel hierfür ist die Gewinnung von Wirkstoffen aus Zellsuspensionen, in denen genmodifizierte Zellen Stoffe wie Antikörper, Hormone, Wachstumsfaktoren oder Enzyme in meist kleinen Konzentrationen produziert haben. Eine wichtige Anwendung ist auch die extrakorporale Entfernung von unerwünschten Substanzen aus dem menschlichen Blutplasma sowie die Gewinnung von Komponenten wie z.B. Immunglobulinen oder Gerinnungsfaktoren aus gespendetem Blutplasma. Schließlich ist eine breite Anwendung auch die katalytische oder biokatalytische - enzymatische - Behandlung von Flüssigkeiten wie z.B. die Hydrolyse von Ölen durch Lipasen, die an einer Matrix immobilisiert sind.

Die stoffspezifische Behandlung von Fluiden erfolgt vielfach derart, daß das zu behandelnde Fluid mit einem Trägermaterial in Kontakt gebracht wird, auf und/oder in dem wechselwirkende Gruppen oder Substanzen immobilisiert sind, die in spezifischer, selektiver Weise mit der in dem Fluid enthaltenen Zielsubstanz, d.h. der Substanz, auf die die stoffspezifische Behandlung ausgerichtet ist, wechselwirken. Solche Wechselwirkungen können beispielsweise Kationen- oder Anionenaustausch, Hydrophil-Hydrophob-Wechselwirkung, Wasserstoffbrückenbildung, Affinität oder enzymatische oder katalytische Reaktionen und dergleichen sein. Bei der affinen Stofftrennung sind an das Trägermaterial Liganden gekoppelt oder im Trägermaterial immobilisiert, die die Funktion haben, eine einzelne Zielsubstanz oder auch eine ganze Klasse von Substanzen adsorptiv spezifisch zu binden. Diese Zielsubstanz wird als Ligat bezeichnet. Ein Beispiel für klassenspezifische Liganden sind positiv geladene Diethylaminoethyl(DEAE)-Gruppen oder negativ geladene Sulfonsäure(SO₃)-Gruppen, die die Klasse der positiv geladenen bzw. negativ geladenen Moleküle adsorbieren. Spezifische Liganden sind z.B. Antikörper gegen ein bestimmtes Protein, das als Ligat an den Antikörper gebunden wird.

Als stoffspezifische Behandlungen im Sinne der vorliegenden Erfindung werden auch solche Behandlungen verstanden, durch die Moleküle oder Partikel aufgrund ihrer Größe abgeschieden oder zurückgehalten werden. Für zahlreiche Anwendungen ist es wünschenswert bzw. erforderlich, ein zu behandelndes Fluid mehreren und eventuell auch unterschiedlichen stoffspezifischen Behandlungen zu unterziehen. So ist es bei Filtrationsprozessen von Suspensionen mit unterschiedlichen Partikelfraktionen sinnvoll, zunächst größere Partikel mit einem groben offenporigen Vorfilter vorzufiltrieren und dann das Filtrat einer weiteren stoffspezifischen Behandlung z.B. nach der Größe oder nach der Affinität zu einem Liganden zu unterziehen.

In dem sogenannten "down stream processing", d.h. z. B. der weiteren Aufarbeitung biotechnisch hergestellter Substanzen wie Proteine oder Biomoleküle, werden mehrere Prozeßstufen der Stofftrennung hintereinandergeschaltet, um möglichst effizient eine bestimmte Zielsubstanz, z.B. ein Enzym, aus einer vorfiltrierten Zellsuspension zu isolieren. Dabei werden auch Virusfiltrationsstufen in Serie mit chromatographischen Stufen eingesetzt. In anderen Trennverfahren werden anionische Adsorber sequentiell mit kationischen Adsorbern oder ionische Adsorber sequentiell mit hydrophoben Adsorbern eingesetzt. Häufig müssen bestimmte Größen von partikulären Bestandteilen, z. B. eines Präzipitats, aus einer zu behandelnden Suspension zurückgehalten werden, bevor die Zielsubstanz in mindestens einer chromatographischen Trennstufe gewonnen wird.

Wesentliche Kriterien bei der stoffspezifischen Behandlung von Fluiden sind Produktivität und Selektivität. Mit Blick auf die Produktivität ist es wichtig, daß möglichst viele stoffspezifisch wirkende Gruppen pro Volumeneinheit zur Verfügung stehen, die mit der in dem zu behandelnden Fluid enthaltenen Zielsubstanz in Wechselwirkung treten können. Gleichzeitig ist eine Maximierung des Transports der Zielsubstanz zu den stoffspezifisch wirkenden Gruppen bzw. Substanzen anzustreben.

Ein in der Affinitätschromatographie häufig eingesetztes Trägermaterial für Liganden sind Sepharosepartikel, die in Form einer Schüttung in einer Chromatographiesäule vorliegen. Wenngleich sich hierbei eine hohe Konzentration an Liganden mit hoher Selektivität realisieren läßt, ist die Produktivität wegen der Kompressibilität der Sepharosepartikel bekanntermaßen gering. Darüberhinaus ist der Zugang der Ligaten zu den in den Sepharosepartikeln enthaltenen Liganden diffusionskontrolliert, wodurch insbesondere bei der Abtrennung von größeren Molekülen wie z.B. von Proteinen aufgrund deren geringen Diffusionsgeschwindigkeiten lange Verweilzeiten und damit nur geringe Durchsätze und geringe Produktivitäten resultieren. Verbesserte Chromatographie-Säulenmaterialien werden in der US-A-5 019 270 beschrieben. Diese bestehen aus starren, porösen Partikeln, die konvektiv durchströmt werden können. Aufgrund des konvektiven Stofftransports durch die Partikel und der fehlenden Kompressibilität ist gegenüber dem zuvor genannten Säulenmaterial eine Reduzierung der Verweilzeit und eine Steigerung der Produktivität möglich.

Zwar ist ein Vorteil von mit solchen Partikeln gefüllten Chromatographiesäulen, daß deren Aufbau und Verwendung sehr einfach ist. Sie weisen jedoch eine Reihe von Nachteilen auf, wobei außer den für Sepharosepartikel diskutierten Nachteilen als weiterer Nachteil eine in vielen Fällen ungleichförmige Durchströmung der Partikelschüttungen zu nennen ist, die sich negativ in Bezug auf eine gleichmäßige Nutzung aller in der Chromatographiesäule vorhandener Liganden auswirkt. Eine Vergleichmäßigung der Strömung zwischen den Partikeln könnte wohl durch Verwendung von kugelförmigen Partikeln mit möglichst einheitlichem Durchmesser erreicht werden. Die Herstellung solcher einheitlicher Partikel ist jedoch aufwendig.

Die geschilderten Nachteile partikelförmiger Trägermaterialien führten zur Entwicklung einer Reihe von Verfahren zur stoffspezifischen Behandlung von Fluiden, bei denen Membranen mit poröser Struktur als Trägermaterialien für wechselwirkende Gruppen eingesetzt werden. Aufgrund ihrer porösen Struktur stellen Membranen eine große innere Oberfläche zur Verfügung, so daß an die Membranen in einer hohen Konzentration pro Volumeneinheit eine große Anzahl von funktionellen Gruppen gekoppelt werden kann, die in Wechselwirkung mit den die Membran durchströmenden, zu behandelnden Fluiden treten (s. z.B. E. Klein, "Affinity Membranes", John Wiley & Sons, Inc., 1991; S. Brandt u. a., "Membrane-Based Affinity Technology for Commercial Scale Purifications", Bio/Technology Vol. 6 (1988), S. 779-782).

Über die Ausführung der verwendeten Membran kann eine Anpassung an die Erfordernisse des Behandlungsverfahrens erfolgen. Es stehen Membranen in Form von Hohlfasern oder als Flachmembranen aus unterschiedlichsten Materialien zur Verfügung, so daß eine Anpassung an die physikochemischen Eigenschaften der zu behandelnden Fluide möglich ist. Auch die Porengröße der Membranen kann so eingestellt werden, daß ein zu behandelndes Fluid z.B. mit einer in ihm enthaltenen Zielsubstanz durch die Membran konvektiv hindurchströmen kann und - im Falle der Anbindung der Zielsubstanz an die wechselwirkenden Gruppen - keine Blockierung der Membran eintritt.

Durch die Dicke der Membranwand läßt sich bei gegebener linearer Flußgeschwindigkeit die Verweilzeit des zu behandelnden Fluids in der Membran sowie der bei der Durchströmung entstehende Druckverlust beeinflussen. Aufgrund ihrer in der Regel nur geringen Wanddicke (z.B. <300 µm) zeichnen sich Membranen durch kurze Transportwege des zu behandelnden Fluids zu wechselwirkenden Gruppen aus, wodurch die Verweilzeiten vergleichsweise kurz, die Druckverluste gering, die linearen Flußgeschwindigkeiten und damit die Bindungsraten hoch sind. Gleichzeitig führt die im wesentlichen gleichförmige Dicke der Membranwand bei entsprechender Anströmung der Membran zu einer gleichmäßigen Durchströmung des Trägermaterials und daraus folgend zu einer vergleichsweise engen Verweilzeitverteilung sowie gleichmäßigen und vollständigen "Nutzung" der wechselwirkenden Gruppen.

Es sind eine Reihe von solche Membranen enthaltenden Vorrichtungen beschrieben, die bei Verfahren zur stoffspezifischen Behandlung von Fluiden verwendet werden und bei denen sowohl Flachmembranen als auch Hohlfasermembranen zum Einsatz kommen. Dabei ist zwischen der sogenannten dead-end-Filtration bzw. den dead-end-Modulen und der cross-flow-Filtration bzw. den cross-flow-Modulen zu unterscheiden.

Bei der dead-end-Filtration wird das gesamte, als Feedstrom in den Membranmodul einströmende Fluid durch die Membran hindurchgeführt und auf der der Einströmseite der Membran gegenüberliegenden Abströmseite als Filtrat bzw. Permeat abgeleitet.

Bei der Fahrweise im cross-flow-Modus fließt der Feedstrom parallel zur einen Seite der Membran. Dabei tritt ein Teil des Feedstroms durch die Membran hindurch. Der hindurchgetretene Teilstrom wird als Permeat, der auf der Feedstromseite verbleibende Teilstrom als Retentat abgeleitet. Hierbei kann auch auf der Permeatseite der Membran ein zusätzlicher Fluidstrom eingeleitet werden, der den durch die Membran hindurchgetretenen Teilstrom aufnimmt.

Die WO 90/05018 offenbart einen Membranmodul zur Anwendung bei Affinitätstrennverfahren, der vom Aufbau einem cross-flow-Modul entspricht. Eine ligathaltige Flüssigkeit wird über eine Einlaßvorrichtung in das Modulgehäuse eingeleitet und strömt tangential über die eine Seite einer beispielsweise hohlfaserförmigen Membran, an die Liganden gekoppelt sind. Ein Teil der Flüssigkeit tritt in die Membran ein, strömt durch diese hindurch, wobei die Ligaten an die Liganden angelagert werden, und tritt auf der der Eintrittsseite gegenüberliegenden Membranseite als Permeatstrom aus. Über getrennte Auslaßeinrichtungen werden Retentatstrom und Permeatstrom abgeleitet.

In der EP-A-0 341 413 wird ein Adsorbermodul zur Behandlung von Vollblut beschrieben, bei dem die im Modul enthaltenen, mit Liganden versehenen Hohlfasermembranen im cross-flow-Modus lumenseitig vom Blut durchströmt werden. Hierbei tritt Plasma als Permeat durch die Hohlfasermembranwand in den die Hohlfasermembranen umschließenden Außenraum, wobei in der Membranwand die Behandlung des Plasmas erfolgt. In einer speziellen Ausführungsform besitzt dieser Modul keinen Auslaß für das Permeat, sondern bei der Behandlung von Vollblut sammelt sich das als Permeat abgetrennte Plasma im Außenraum um die Kapillaren und tritt infolge der sich einstellenden Druckverhältnisse wieder durch die Hohlfasermembranwandung in das Lumen der Hohlfasermembran ein. Ein solches Modulkonzept hat jedoch den Nachteil, daß auf den die Membran durchtretenden Plasmastrom, d.h. den zu behandelnden Fluidstrom nur in eingeschränktem Maße Einfluß genommen werden kann. Darüberhinaus sind die erforderlichen Behandlungszeiten relativ lang, da allein zur Befüllung des Außenraums um die Hohlfasermembranen herum Permeatzeiten von mehr als 10 min erforderlich sind.

Die beschriebenen, im cross-flow-Modus betriebenen Module zur stoffspezifischen Behandlung von Flüssigkeiten weisen verschiedene Nachteile wie z.B. das Erfordernis zusätzlicher Pumpen und/oder Kontrollorgane aufgrund getrennter Permeat- und Retentatströme auf.

In der US-A-4 935 142 wird eine Vorrichtung zur Durchführung von Affinitätstrennverfahren im dead-end-Modus beschrieben, die Stapel aus Flachmembranen enthält. An die Flachmembranen sind Liganden gekoppelt, an die aus der zu behandelnden Flüssigkeit abzutrennende Ligaten gebunden werden. Die Anzahl der die Stapel aufbauenden Flachmembranscheiben und damit die Membranfläche hängt von der erforderlichen Kapazität der Vorrichtung ab und dessen zulässigen Druckverlust. Die den Membranstapel aufbauenden Flachmembranen müssen gegen das umgebende Gehäuse abgedichtet werden, um so eine Zwangsströmung durch den Membranstapel zu erzeugen. Ein derartiger Aufbau erweist sich unter dem Gesichtspunkt der Maßstabsvergrößerung als ungünstig, da zur Bereitstellung einer genügend großen Membranfäche der Stapel eine Vielzahl von Flachmembranen enthalten muß, woraus ein hoher Druckverlust bei der Durchströmung des Stapels resultiert. Bei einer Vergrößerung des Durchmessers der Flachmembranscheiben sind hingegen zusätzliche Maßnahmen erforderlich, um eine gleichmäßige Verteilung auf die Membranscheiben zu gewährleisten und dabei den Flachmembranelementen sowie dem Gehäuse eine hinreichende Stabilität gegenüber den auftretenden Drücken zu verleihen.

In der EP-A-0 173 500 werden ebenfalls Vorrichtungen für den Einsatz bei membranbasierten Affinitätstrennverfahren wie z. B. der Isolierung von Immunglobulinen, Antikörpern u.ä. beschrieben. Diese Vorrichtungen bzw. Membranmodule enthalten sternförmig gefaltete, mikroporöse Flachmembranen. Die sternförmig gefalteten Flachmembranen sind zwischen zwei groben Gittern abgestützt und zwischen zwei koaxial zueinander angeordneten zylinderförmigen Gehäuseelemente eingebracht. Gemäß EP-A-0 610 755 werden bei gleichem Aufbau der Vorrichtungen wie in der EP-A-0 173 500 beschrieben mehrere sternförmig gefaltete Flachmembranen konzentrisch zueinander im Gehäuse angeordnet, um die Membranfläche zu vergrößern, die Durchströmung zu vergleichmäßigen und einem Durchbruch der Zielsubstanzen entgegenzuwirken.

Die zu behandelnde Flüssigkeit wird bei den genannten Vorrichtungen unter Druckbeaufschlagung von innen nach außen oder auch in umgekehrter Richtung durch den Modul geführt und durchströmt dabei im dead-end-Modus die Membran. Gegenüber Modulen mit ungefalteten, konzentrisch zueinander angeordneten Membranen bieten die genannten Module den Vorteil einer relativ größeren Membranfläche bei vergleichsweise geringerem Druckverlust. Jedoch sind in der Regel nur geringe Füllgrade, definiert als Membranvolumen bezogen auf das Gesamtvolumen des Moduls, möglich.

Die DE-A-33 02 384 beschreibt einen Hohlfasermembranen enthaltenden dead-end-Modul zur Plasmabehandlung, der zwei hintereinandergeschaltete, fraktionierende Bündel von Hohlfasermembranen zur Abscheidung pathologischer Plasmamoleküle enthält. Die Enden der Hohlfasermembranen der beiden Membranbündel sind so in gemeinsamen Einbettungen im Gehäuse des Moduls eingegossen, daß die Hohlfasermembranen des ersten Membranbündels an ihrem dem Einlauf in den Modul zugewandten Ende offen und an ihrem entgegengesetzten Ende verschlossen sind, wohingegen die Hohlfäsermembranen des zweiten Membranbündels an ihrem dem Auslauf aus dem Modul zugewandten Ende geöffnet und an ihrem anderen Ende verschlossen sind. Die offenen Enden der beiden Hohlfaserbündel sind also entgegengesetzt angeordnet. Im Betrieb strömt das zu behandelnde Blutplasma, aus dem die pathogenen-Bestandteile abgefiltert werden sollen, im dead-end-Modus zunächst über die geöffneten Enden der Hohlfasermembranen des ersten Membranbündels in das Lumen dieser Membranen und durch deren Wand in den extraluminaren Bereich. Das somit einmal filtrierte Plasma fließt dann von außen nach innen in das Lumen der Hohlfasermembranen des zweiten Membranbündels und verläßt diese durch deren geöffnete Enden.

Ein ähnlicher dead-end Modul wie in der DE-A-33 02 384 wird auch in der EP-A-0 283 826 beschrieben. Auch bei dem Modul der EP-A-0 283 826 sind in einem Gehäuse zwei in Strömungsverbindung stehende Bündel aus Hohlfasermembranen nebeneinander angeordnet, wobei die Hohlfasermembranen an ihren Enden in Vergußmassen eingebettet sind. Die der Einlaßeinrichtung des Moduls zugewandte erste Vergußmasse begrenzt einen Verteilerraum und die der Auslaßeinrichtung zugewandte zweite Vergußmasse einen Sammelraum. Die Hohlfasermembranen sind so in die Vergußmassen eingebettet, daß im Bereich der ersten Vergußmasse die Hohlräume des ersten Hohlfaserbündels und im Bereich der zweiten Vergußmasse die Holräume des zweiten Hohlfaserbündels verschlossen sind.

Vielen dead-end- und cross-flow-Modulen gemeinsam ist der Nachteil, daß die Herstellung der Membranmodule für bestimmte Anwendungen aufwendig ist, da eine Einbettung der Membranen in das Gehäuse stets erforderlich ist. Dies ist z.B. dann von besonders großem Nachteil, wenn der Behandlungsprozeß die Hintereinanderschaltung mehrerer Module erforderlich macht. Besonders nachteilig wirkt sich das Erfordernis einer Einbettung auch aus, wenn zur Kopplung oder Polymerisation von Liganden aggressive Lösemittel wie z.B. Toluol zum Einsatz kommen und diese Kopplung in der Vorrichtung stattfindet. In der Praxis hat sich gezeigt, daß eine dann erforderliche lösungsmittelbeständige Einbettung sehr aufwendig und mit hohen Kosten verbunden ist. Ferner hat sich in der Praxis gezeigt, daß es besonders bei sehr großen Modulen nicht einfach ist, eine solche Einbettung auch bei längerem Betrieb dicht zu halten und Leckagen zu vermeiden.

Es ist daher Aufgabe der Erfindung, eine Vorrichtung der eingangs genannten Art zur stoffspezifischen Behandlung von Fluiden zur Verfügung zu stellen, bei der die genannten Nachteile des Standes der Technik zumindest reduziert sind und die in einfacher Weise herstellbar ist. Die Vorrichtung soll flexibel an die jeweilige Fluidbehandlung angepaßt werden können und insbesondere gleichzeitig verschiedenartige stoffspezifische Behandlungen und/oder unmittelbar aufeinanderfolgend verschiedenartige stoffspezifische Behandlungen ermöglichen.

Es ist des weiteren Aufgabe der Erfindung, ein Verfahren zur effizienten stoffspezifischen Behandlung von Fluiden unter Verwendung von semipermeablen Membranen mit poröser Struktur bereitzustellen, bei dem die oben genannten Nachteile zumindest reduziert sind.

Die Aufgabe wird bei einer Vorrichtung gemäß Oberbegriff des Anspruchs 1 dadurch gelöst, daß die Behandlungselemente zu mindestens einer Gruppe von im wesentlichen quer zur Erstrekkung des Gehäuses zwischen Einlaßeinrichtung und Auslaßeinrichtung jeweils zueinander benachbarten ersten und zweiten Behandlungselementen zusammengefaßt sind, wobei die in einer Gruppe zusammengefaßten Behandlungselemente eine Stufe ausbilden und innerhalb einer Stufe der Füllgrad ε des Gehäuses zwischen 0,6 und 0,999 liegt, daß die Enden der Behandlungselemente frei von einer die Enden aller Behandlungselemente einer Gruppe einschließenden Einbettung sind, daß der Verteilerraum lediglich von dem Gehäuse, der Einlaßeinrichtung und den der Einlaßeinrichtung zugewandten Enden der der Einlaßeinrichtung benachbarten Gruppe von Behandlungselementen begrenzt wird, daß der Sammelraum lediglich von dem Gehäuse, der Auslaßeinrichtung und den der Auslaßeinrichtung zugewandten Enden der der Auslaßeinrichtung benachbarten Gruppe von Behandlungselementen begrenzt wird.

Hierbei ist der Füllgrad ε definiert als V_{B}/ (V_{B}+V_{Z}), mit V_{B} als der Summe der Volumia V_{b} der einzelnen in der Stufe enthaltenen Behandlungselemente und V_{z} als dem Volumen des sich zwischen den Behandlungselementender Stufe und sich zwischen der Gehäuseinnenwand und den der Gehäuseinnenwand benachbarten Behandlungselementen der Stufe ausbildenden Zwischenraums. Das Volumen eines einzelnen Behandlungselemts V_{b} wiederum setzt sich zusammen aus Volumen V_{w} seiner Wände und dem Volumen Vₕ seines mindestens einen Hohlraums.

Die Aufgabe wird desweiteren durch ein Verfahren zur stoffspezifischen Behandlung eines Fluids unter Verwendung dieser Vorrichtung gelöst, welches Verfahren mindestens folgende Schritte umfaßt:
a) Einleiten des zu behandelnden Fluids über die Einlaßeinrichtung des Gehäuses in den Verteilerraum,
b) Einströmen zumindest eines Teils des zu behandelnden Fluids aus dem Verteilerraum in die Hohlräume der ersten Behandlungselemente einer Gruppe von Behandlungselementen und Durchströmen der Wände der ersten Behandlungselemente, wobei eine stoffspezifische Behandlung des Fluids erfolgt,
c) Ausströmen des so stoffspezifisch behandelten Fluids aus den ersten Behandlungselementen aus deren Wänden,
d) Einströmen zumindest eines Teils des in den ersten Behandlungselementen stoffspezifisch behandelten Fluids in die Wände der zweiten Behandlungselemente der Gruppe und Durchströmen der Wände, wobei eine stoffspezifische Behandlung des die Wände der zweiten Behandlungselemente durchströmenden Fluids erfolgt,
e) Ausströmen des in den zweiten Behandlungselementen stoffspezifisch behandelten Fluids aus den Hohlräumen der zweiten Behandlungselemente,
f) Sammeln des behandelten Fluid im Sammelraum,
g) Ableiten des behandelten Fluids über die Auslaßeinrichtung des Gehäuses.

Aufgrund der Ausgestaltung der Behandlungselemente wird die dem Hohlraum der Behandlungselemente zugewandte Seite der Wände der Behandlungselemente bzw. der die Wände ausbildenden Membran als Innenseite der Behandlungselemente bzw. der Membran bezeichnet und die dem Hohlraum abgewandte Seite der Wände der Behandlungselemente bzw. der die Wände ausbildenden Membran als Außenseite der Behandlungselemente bzw. der Membran.

Unter zu behandelnden Fluiden werden dabei im Rahmen der vorliegenden Erfindung solche Fluide verstanden, die bestimmte Stoffe oder Zielsubstanzen enthalten, auf die die stoffspezifische Behandlung ausgerichtet ist.

Die in der erfindungsgemäßen Vorrichtung enthaltenen ersten und zweiten Behandlungselemente sind in das Gehäuse eingebracht, ohne daß eine Einbettung der Enden der Behandlungselemente erforderlich ist, d.h. die Enden der Behandlungselemente sind frei von einer die Enden aller Behandlungselemente einer Gruppe einschließenden Einbettung. Hieraus resultiert, daß die Behandlungselemente der der Einlaßeinrichtung benachbarten Gruppe von Behandlungselementen mit ihren der Einlaßeinrichtung zugewandten Enden in direkter Verbindung mit dem Verteilerraum stehen und diesen begrenzen. Ebenso stehen die Behandlungselemente der der Auslaßeinrichtung benachbarten Gruppe von Behandlungselementen mit ihren der Auslaßeinrichtung zugewandten Enden in direkter Verbindung mit dem Sammelraum und begrenzen diesen.

Eine derart ausgestaltete Vorrichtung bietet im Gegensatz zu Vorrichtungen nach dem Stand der Technik, bei denen stets eine Einbettung der Behandlungselemente z.B. mit Epoxidharzen erforderlich ist, den Vorteil, daß deutlich geringere Anforderungen an die Materialauswahl gestellt werden müssen, da mögliche Materialprobleme aufgrund einer Einbettung außer Betracht gelassen werden können. Gerade aber aus den Einbettmaterialien bei den Vorrichtungen nach dem Stand der Technik können sich aber - wie ausgeführt - beim Einsatz für stoffspezifische Fluidbehandlungen große Probleme ergeben.

Aus der Zuordnung von Verteiler- und Sammelraum zu Einlaßeinrichtung bzw. Auslaßeinrichtung ergibt sich, daß die dem Verteilerraum zugewandte Seite der Gruppe von Behandlungselementen, d.h. gleichzeitig die Seite, auf der das mindestens eine erste Behandlungselement seine Öffnung besitzt, die Zu- oder Anströmseite ist, von der aus das zu behandelnde Fluid auf die Gruppe von Behandlungselementen zuströmt. Die gegenüberliegende Seite, auf der das mindestens eine zweite Behandlungselement seine Öffnung besitzt und die dem Sammelraum zugewandt ist, stellt demzufolge die Abströmseite dar.

Bevorzugt weisen die ersten und zweiten Behandlungselemente einer Gruppe gleiche Länge auf, und die der Einlaßeinrichtung und die der Auslaßeinrichtung zugewandten Enden der zu einer Gruppe zusammengefaßten Behandlungselemente liegen im wesentlichen jeweils in einer Ebene senkrecht zur Richtung der Erstreckung des Gehäuses zwischen Einlaßeinrichtung und Auslaßeinrichtung.

Die in einer Gruppe zusammengefaßten Behandlungselemente bilden eine Behandlungsstufe bzw. Stufe aus. Dabei kann eine eine Stufe ausbildende Gruppe von Behandlungselementen auch aus mehreren Untergruppen zusammengesetzt sein, die mindestens ein erstes und ein zweites Behandlungselement enthalten. Zur Erhöhung des Wirkungsgrades der stoffspezifischen Behandlung ist es von Vorteil, wenn die Schritte b) bis d) des erfindungsgemäßen Verfahrens mehrfach durchlaufen werden. Dies läßt sich dadurch erreichen, daß im Gehäuse in Richtung der Erstreckung des Gehäuses zwischen Einlaßeinrichtung und Auslaßeinrichtung, d.h. in Richtung der Durchströmung des Gehäuses mehrere Gruppen von Behandlungselementen oder Stufen hintereinander angeordnet sind. Durch die Hintereinanderschaltung einer Vielzahl von Stufen kann gleichzeitig die einzelne Stufe in ihrer Abmessung in Richtung der Durchströmung des Gehäuses kurz gehalten werden. Bevorzugt sind bei der erfindungsgemäßen Vorrichtung bis zu 100 Stufen und besonders bevorzugt bis zu 10 Stufen hintereinander angeordnet.

Dabei ist es vorteilhaft, wenn die einzelnen Stufen einen Abstand zueinander aufweisen, um eine eventuell erforderliche Durchmischung des eine Stufe verlassenden Fluidstroms zur Vermeidung von Konzentrationsschwankungen zu ermöglichen, bevor dieser der nächsten Stufe zugeführt wird. Der hierbei entstehende Zwischenraum wird analog zum Verteilerraum und zum Sammelraum lediglich durch die Gehäusewand und die dem Zwischenraum zugewandten Enden der angrenzenden Gruppen von Behandlungselementen begrenzt und entspricht in seiner Funktion zum einen einem Sammelraum für die in Richtung der Einlaßeinrichtung benachbarte Gruppe von Behandlungselementen und zum anderen gleichzeitig einem Verteilerraum für die in Richtung der Auslaßeinrichtung benachbarte Gruppe von Behandlungselementen. Dieser Zwischenraum kann mit fluiddurchlässigen Elementen z.B. in Form von Vliesen, Gittern oder Geweben angefüllt sein, um so die radiale und tangentiale Durchmischung des eine Stufe verlassenden Fluids zu verbessern und die gleichzeitig, falls erforderlich, eine Stützfunktion für die Gruppen von Behandlungselementen ausüben zu können. In gleicher Weise können in Einzelfällen auch der Verteilerraum und/oder der Sammelraum der erfindungsgemäßen Vorrichtung ein fluiddurchlässiges Element enthalten, das der Strömungsvergleichmäßigung dient und/oder eine Stützfunktion für die benachbarten Behandlungselemente-Gruppen aufweist.

Natürlich ist in Anpassung an die Erfordernisse des Behandlungsverfahrens auch die Hintereinanderschaltung mehrerer erfindungsgemäßer Vorrichtungen möglich, die vorzugsweise mehrere Stufen von Behandlungselementen enthalten.

Die in Gruppen zusammengefaßten Behandlungselemente können untereinander und gegenüber der Gehäuseinnenwand einen Abstand aufweisen. In diesem Fall strömt das zu behandelnde Fluid über den in Richtung der Durchströmung des Gehäuses vor einer Gruppe von Behandlungselementen gelegenen Verteilerraum zum einen Teil durch das von den Zwischenräumen zwischen den Behandlungselementen und zwischen Gehäuseinnenwand und benachbarten Behandlungselementen gebildete Kanalsystem hindurch. Ein weiterer Teil des Fluidstroms strömt in die Hohlräume der zur Einlaßeinrichtung hin geöffneten und zur Auslaßeinrichtung geschlossenen, ersten Behandlungselemente ein und durchströmt die zumindest teilweise aus mindestens einer semipermeablen Membran bestehende Wand der ersten Behandlungselemente. Hierbei wird dieser Teil des Fluids einer stoffspezifischen Behandlung in Bezug auf im Fluid enthaltene Zielsubstanzen unterzogen. Nachfolgend strömt dieser Teilstrom in den die ersten Behandlungselemente umgebenden Außenraum aus, wo eine Vermischung mit dem das Kanalsystem durchströmenden bzw. durch das Kanalsystem hindurchgeströmten Teilstrom des Fluids erfolgt.

Aufgrund des durch die Strömung im Kanalsystem erzeugten Druckgefälles entlang der Behandlungselemente dringt ein Teil des durch das Kanalsystem strömenden Teilstroms in die zweiten Behandlungselemente ein und durchströmt deren semipermeablen Wände. Hierbei erfolgt ebenfalls eine stoffspezifische Behandlung in Bezug auf im Fluid enthaltene Zielsubstanzen. Anschließend strömt der so behandelte Teilstrom in die in Richtung der Auslaßeinrichtung geöffneten Hohlräume ein und durch deren Öffnung aus den Behandlungselementen heraus und wird in dem in Richtung der Durchströmung des Gehäuses hinter der Gruppe von Behandlungselementen gelegenen Sammelraum gesammelt.

Die relative Größe der genannten Teilströme hängt von mehreren Bedingungen ab, wie z.B. vom Druckabfall in den porösen Wänden der Membranelemente, vom Abstand zwischen den Behandlungselementen und zwischen Behandlungselementen und Gehäuseinnenwand und damit von der Querschnittsdimension der im Zwischenraum ausgebildeten Strömungskanäle oder vom Druckgradienten in diesen Strömungskanälen entlang der Behandlungselemente.

Für diesen Fall, daß die in Gruppen zusammengefaßten Behandlungselemente untereinander und gegenüber der Gehäuseinnenwand einen Abstand aufweisen, ist es von Vorteil, wenn die zu einer Gruppe zusammengefaßten Behandlungselemente durch Abstandshalter gegeneinander auf Abstand gehalten werden, so daß sich um die Behandlungselemente herum ein Kanalsystem mit definierten Kanälen ausbildet, durch das eine gleichmäßige Durchströmung der Gruppe aus Behandlungselementen und eine gleichmäßige Umströmung der einzelnen Behandlungselemente ermöglicht wird. Darüber hinaus läßt sich über die Abstandshalter die Größe der Strömungsquerschnitte der Kanäle einstellen und damit Einfluß auf den sich in den Kanälen einstellenden Druckgradienten nehmen.

Zweckmäßigerweise sind die Abstandshalter so ausgeführt, daß sie eine elastische Komponente aufweisen. Hierdurch kann eine solche Gruppe aus Behandlungselementen auf einfache Weise in das Gehäuse der Vorrichtung eingebracht werden, indem die Gruppe zunächst geringfügig zusammengedrückt wird, wobei der Abstand zwischen den Behandlungselementen etwas verringert wird, in das Gehäuse eingeschoben wird und anschließend entspannt wird, wodurch sich der Abstand zwischen den Behandlungselementen wieder vergrößert. Als Folge wird erreicht, daß die Gruppe von Behandlungselementen an ihrem äußeren Umfang an der Gehäuseinnenwand anliegt und eine unerwünschte Randströmung entlang der Gehäuseinnenwand verringert wird.

Bevorzugt wird jedoch eine Ausführungsform der Erfindung, bei der die Behandlungselemente so im Gehäuse angeordnet sind, daß der Zwischenraum zwischen den Behandlungselementen innerhalb einer Gruppe sowie der Zwischenraum zwischen den Behandlungselementen und der Gehäuseinnenwand minimiert ist. Idealerweise liegen die Außenwände der ersten und zweiten Behandlungselemente einer Gruppe direkt aneinander.

Bei dieser bevorzugten Ausführung mit minimiertem Zwischenraum strömt das zu behandelnde Fluid bis auf einen gegebenenfalls noch durch den Zwischenraum strömenden geringen Leckstrom vollständig aus dem in Richtung der Durchströmung des Gehäuses vor einer Gruppe von Behandlungselementen gelegenen Verteilerraum in die Hohlräume der zur Einlaßeinrichtung hin geöffneten und zur Auslaßeinrichtung geschlossenen, ersten Behandlungselemente ein, tritt durch die Innenseite der zumindest teilweise aus mindestens einer semipermeablen Membran bestehenden Wände der ersten Behandlungselemente in die Wände ein und durchströmt diese. Hierbei wird das Fluid einer ersten stoffspezifischen Behandlung in Bezug auf im Fluid enthaltenen Zielsubstanzen unterzogen. Nachfolgend tritt das so behandelte Fluid über die Außenseite der Wände der ersten Behandlungselemente aus den ersten Behandlungselementen aus.

Anschließend tritt das so behandelte Fluid bis auf einen gegebenenfalls durch den Zwischenraum strömenden geringen Leckstrom über die Außenseite der angrenzenden, zumindest teilweise aus mindestens einer semipermeablen Membran bestehenden Wände der zweiten Behandlungselemente in die Wände der zweiten Behandlungselemente ein und durchströmt diese. Hierbei findet eine weitere stoffspezifische Behandlung in Bezug auf im Fluid enthaltene Zielsubstanzen statt. Danach tritt der dieser weiteren stoffspezifischen Behandlung unterzogene Fluidstrom über die Innenseite der Wände der zweiten Behandlungselemente in die zur Auslaßeinrichtung hin geöffneten und zur Einlaßeinrichtung geschlossenen Hohlräume dieser Behandlungelemente ein und strömt aus diesen Hohlräumen in den angrenzenden Sammelraum ein, der gegebenenfalls gleichzeitig Verteilerraum in Bezug auf eine nachfolgende Behandlungsstufe ist.

Abhängig davon, wie dicht die ersten und zweiten Behandlungselemente innerhalb einer Gruppe nebeneinander angeordnet werden können, wird ein mehr oder weniger großer Leckstrom durch die Zwischenräume zwischen den Behandlungselementen auftreten, so daß nicht der gesamte, der ersten stoffspezifischen Behandlung unterzogene Fluidstrom in der gleichen Stufe auch der zweiten stoffspezifischen Behandlung unterzogen wird. Je nach Ausführung der ersten Behandlungselemente kann auch ein Teil des die ersten Behandlungselemente durchströmenden Fluids durch die der Auslaßeinrichtung zugewandten geschlossenen Enden der ersten Behandlungselemente direkt in den angrenzenden Sammelraum einströmen. Ebenso ist es möglich, daß ein gewisser Teil des Fluidstroms über die der Einlaßeinrichtung zugewandten geschlossenen Enden der zweiten Behandlungselemente direkt in die zweiten Behandlungselemente eintritt, ohne vorher ein erstes Behandlungselement durchströmt zu haben.

Es wird jedoch angestrebt, daß diese Teilströme, die nicht sowohl ein erstes als auch ein zweites Behandlungselement durchlaufen haben, minimiert werden, um so den Wirkungsgrad der stoffspezifischen Behandlung zu maximieren. Daher liegt innerhalb einer Stufe der Füllgrad des Gehäuses erfindungsgemäß zwischen 0,6 und 0,999 und bevorzugt zwischen 0,95 und 0,999 liegt.

Wie bereits ausgeführt, ist eine weitere Maßnahme zur Maximierung des Wirkungsgrades der stoffspezifischen Behandlung die Hintereinanderschaltung von mehreren Stufen von Behandlungselementen. Hierdurch wird gleichzeitig die Wahrscheinlichkeit, daß der durch das Kanalsystem zwischen den Behandlungselementen strömende Teilstrom bzw. der Leckstrom das Gehäuse über die Austrittseinrichtung verläßt, ohne mindestens einmal durch die Membranwand eines ersten und die eines zweiten Behandlungselements hindurchgetreten zu sein, reduziert, und zwar mit steigender Stufenzahl in steigendem Maße.

Durch Anpassung der Dimension der Behandlungselemente ist es bei der erfindungsgemäßen Vorrichtung möglich, den Strömungswiderstand, den das zu behandelnde Fluid bei der Durchströmung der Hohlräume der ersten und der zweiten Behandlungselemente einer Gruppe zu überwinden hat, so zu gestalten, daß er klein ist gegenüber dem bei der Durchströmung der semipermeablen Wände der Behandlungselemente entstehenden Strömungswiderstand. In einer bevorzugten Ausführung ist dabei der Strömungswiderstand bei der Durchströmung der Hohlräume der ersten Behandlungselemente gleich dem Strömungswiderstand bei der Durchströmung der Hohlräume der zweiten Behandlungselemente einer Gruppe. Damit wird eine über die Erstreckung der Behandlungselemente zwischen Einlaßeinrichtung und Auslaßeinrichtung weitgehend gleichmäßige Durchströmung der Membranwände erzielt.

Je nach Anwendung verhält sich der hydraulische Durchmesser D_{F} der Gesamtheit der Hohlräume der ersten Behandlungselemente einer Gruppe zu dem hydraulischen Durchmesser D_{S} der Gesamtheit der Hohlräume der zweiten Behandlungselemente der Gruppe so, daß 0,9<D_{F}/D_{S}<1,1 gilt. Hierbei ist der hydraulische Durchmesser D_{F} bzw. D_{S} die Summe der hydraulischen Durchmesser D_{f} bzw. Dₛ der Hohlräume der einzelnen ersten bzw. zweiten Behandlungselemente mit der Definition des hydraulischen Durchmessers als 4*A/U, wobei A die Fläche des Strömungsquerschnitts senkrecht zur Durchströmung des Gehäuses und U den Umfang des Strömungsquerschnitts des jeweiligen Hohlraums bezeichnet. Eine derartige Auslegung der Behandlungselemente in Bezug auf den hydraulischen Durchmesser ihrer Hohlräume ist insbesondere dann von Vorteil, wenn es sich bei dem zu behandelnden Fluid z.B. um eine klare Lösung handelt.

In einer bevorzugten Ausgestaltung der erfindungsgemäßen Vorrichtung, bei der stoffspezifische Behandlungen in den Wänden der Behandlungselemente stattfinden, ist es bei der Dimensionierung der Behandlungselemente wichtig, daß pro Behandlungs element ein möglichst hoher Anteil des Volumens des Behandlungselements aus semipermeabler poröser Membranwand besteht, in der die stoffspezifischen Behandlungen erfolgen können. Ein bevorzugtes Verhältnis V_{w}/V_{b} des Volumens der Wände eines Behandlungselements V_{w}, bezogen auf das aus dem Volumen der Wände V_{w} und dem Volumen des mindestens einen Hohlraums Vₕ zusammengesetzten Volumen V_{b} des Behandlungselements liegt im Bereich 0,4 < V_{w}/V_{b} < 0,9, ein besonders bevorzugtes Verhältnis liegt im Bereich 0,6 < V_{w}/V_{b} < 0,8.

Desweiteren ist es vorteilhaft, wenn die Behandlungselemente und ihre Hohlräume ihre Längserstreckung in Richtung der Durchströmung des Gehäuses haben, um so pro Volumeneinheit des Gehäuses ein großes Wandvolumen der Behandlungselemente bei möglichst geringem Druckverlust zur Durchströmung der in dieser Volumeneinheit befindlichen Behandlungselemente realisieren zu können. Von Vorteil ist ein Abmessungsverhältnis L/D der Hohlräume zwischen 2 und 4000, wobei L die Hohlraumabmessung in Durchströmrichtung des Gehäuses und D der hydraulische Durchmesser des jeweiligen Hohlraumquerschnitts senkrecht dazu ist. Besonders vorteilhaft sind Abmessungsverhältnisse L/D zwischen 10 und 400.

Hierbei werden Behandlungselemente bevorzugt, deren Wände eine im wesentlichen gleichmäßige Dicke aufweisen. Dadurch wird bei bevorzugten Ausführungsformen der Erfindung mit 0,9<D_{F}/D_{Z}<1 auch erreicht, daß das zu behandelnde Fluid bei der Durchströmung der Membran an jeder Stelle eines Behandlungselements im wesentlichen gleiche Strömungswiderstände überwinden muß, was im Hinblick auf eine möglichst gleichmäßige Verweilzeit des zu behandelnden Fluids von besonderem Vorteil ist.

In einer bevorzugten Ausführung der Erfindung transportiert das zu behandelnde Fluid die Zielsubstanz oder Zielsubstanzen konvektiv durch die Membranen. Dies setzt voraus, daß die zur Ausbildung der Behandlungselemente eingesetzten semipermeablen Membranen mit poröser Struktur eine Porengröße aufweisen, die einen konvektiven Transport dieser Substanzen durch die Membranen zuläßt. Im Anwendungsfall muß die Porengröße auch auf die Größe der Zielsubstanz bzw. Zielsubstanzen abgestimmt werden, die in Form gelöster Moleküle oder Makromoleküle, aber auch in Form kleiner Teilchen mit einer Teilchengröße im Sub-Mikrometerbereich vorliegen kann. Es kann jedoch auch erforderlich sein, daß die Membranen oder zumindest ein Teil der Membranen, aus denen die ersten und zweiten Behandlungselemente ausgebildet sind, eine trennende Funktion übernehmen sollen und, wie dies bei der stoffspezifischen Behandlung von Suspensionen der Fall sein kann, im zu behandelnden Fluid enthaltende Komponenten zurückhalten sollen. Dies bedeutet, daß die Porengröße einen bestimmten maximalen Wert nicht übersteigen darf. Hierdurch kann beispielsweise auch unerwünschten Wechselwirkungen zwischen derartigen zurückzuhaltenden Komponenten und Gruppen in der Membran, die zur Wechselwirkung mit anderen, in die Membran eindringenden Zielsubstanzen vorgesehen sind, vorgebeugt werden.

Die Erfindung betrifft jedoch auch solche stoffspezifischen Behandlungen, bei denen die Behandlungselemente ausschließlich eine nach der Größe trennende Funktion aufweisen und Wechselwirkungen zwischen den Zielsubstanzen und in der Membran befindlichen stoffspezifisch wirkenden Gruppen nicht stattfinden. Die Zielsubstanzen werden in diesem Fall allein aufgrund ihrer Größe in den Behandlungselementen abgetrennt, und es erfolgt beispielsweise eine Auftrennung der Zielsubstanzen nach ihren Größenklassen.

Auf der anderen Seite kann es im Hinblick auf die im folgenden ausgeführten Anwendungen der erfindungsgemäßen Vorrichtung bzw. Ausführungsformen des erfindungsgemäßen Verfahrens eher wichtig sein, Membranen mit möglichst kleinen Porengrößen und möglichst großem Porenvolumen bzw. möglichst großer Porosität zu verwenden, um so für die stoffspezifische Behandlung eine möglichst große innere Oberfläche der Membranen zur Verfügung zu stellen. Bevorzugt weisen die erfindungsgemäß eingesetzten Membranen eine mittlere Porosität zwischen 50 Vol.% und 90 Vol.% auf. Als mittlere Porosität wird das Verhältnis des Porenvolumens der Membran zum Membranvolumen verstanden, wobei sich das Membranvolumen aus dem Porenvolumen und dem Volumen des die Membranstruktur aufbauenden Materials zusammensetzt.

Die Anforderungen an den Aufbau der Membran, d.h. an ihre Struktur und Porengrößenverteilung über der Membrandicke resultieren aus dem jeweiligen Anwendungsfall der stoffspezifischen Behandlung. Die Membranstruktur kann über die Dicke isotrop sein, d.h. innerhalb der Membranstruktur sind die Porendurchmesser im wesentlichen konstant, sie kann anisotrop, symmetrisch oder auch asymmetrisch sein, und die Membranen können an mindestens einer ihrer Seiten eine Schicht mit wesentlich dichterer Porenstruktur, d.h. z.B. eine Haut aufweisen. Im Falle einer asymmetrischen Membran kann sich die dichtere Schicht an der Innenseite, d.h. der dem Hohlraum des Behandlungselements zugewandten Seite eines jeweiligen Behandlungselements, oder an der Außenseite, d.h. der dem Hohlraum abgewandten Seite des Behandlungselements befinden. Sie kann auch beispielsweise an der dem Zustrom jeweils abgewandten Seite der Behandlungselemente liegen. Hierdurch wird bei einer stoffspezifischen Behandlung aufgrund der Größe der Zielsubstanz bzw. Zielsubstanzen erreicht, daß die die Behandlungselemete aufbauenden Membranen als Tiefenfilter wirken und sich die durch die jeweilige Schicht mit dichterer Porenstruktur zurückgehaltenen Größenklassen in der jeweiligen Membran ansammeln.

In Abstimmung an die jeweilige Anwendung kann es auch vorteilhaft sein, die dichteren Schichten jeweils auf der Zuströmseite der ersten und zweiten Behandlungselemente anzuordnen. Damit werden beispielsweise in Abhängigkeit von der Größe der Poren in den dichteren Schichten im zu behandelnden Fluid enthaltene Moleküle oder suspendierte Partikel bestimmter Größenklassen von den Membranen zurückgehalten und nehmen so nicht an einer gegebenenfalls in der Porenstruktur der Membranen stattfindenden weiteren stoffspezifischen Behandlung teil.

Beispielsweise kann es bei der stoffspezifischen Behandlung von Suspensionen erforderlich sein, daß die zur Ausbildung der ersten Behandlungselemente eingesetzte Membran zur Erzielung einer bestimmten Trennwirkung einen kleinen Porendurchmesser an der dem Hohlraum zugewandten Seite aufweist. Um gleichzeitig einen möglichst großen Fluidstrom durch die Membran bzw. die Behandlungselemente zu erhalten, ist jedoch die übrige Membranstruktur zweckmäßigerweise grobporiger, jedoch je nach Anwendung nicht zu grobporig, um eine möglichst große innere Oberfläche zu erzielen.

Bevorzugt werden Membranen mit einem mittleren Porendurchmesser zwischen 0,01 und 10 µm, besonders bevorzugt solche mit einem mittleren Porendurchmesser zwischen 0,1 und 3 µm eingesetzt.

Zur Bestimmung des mittleren Porendurchmessers werden je nach Größe des Porendurchmessers und je nach Membranstruktur unterschiedliche Verfahren angewandt. Für im wesentlichen isotrope Porenstrukturen werden Porendurchmesser indirekt durch ein Filtrationsexperiment bestimmt, indem eine wässrige Dextranlösung mit einer vorgegebenen Größenverteilung von Dextranmolekülen durch die Membran filtriert wird. Aus dem dabei gemessenen relativen Rückhalt als Funktion der nominalen Moleküldurchmesser wird die Porendurchmesserverteilung und daraus der mittlere Porendurchmesser berechnet. Dieses Verfahren wird beispielsweise von K. Sakai, J. Membrane Science 96 (1994), 91-130, oder von Shin-ichi Nakao, J. Membrane Science 96 (1994) 131-165, für Dialyse- bzw. Filtrationsmembranen beschrieben.

Für anisotrope Membranen, die z.B. eine Schicht mit dichterer Porenstruktur aufweisen, werden zur Bestimmung der mittleren Porendurchmesser innerhalb der dichteren Schicht ebenfalls die zitierten Bestimmungsverfahren basierend auf Filtrationsexperimenten herangezogen. Zur Bestimmung der mittleren Porendurchmesser der grobporigeren Bereiche der anisotropen Membranen wird ein bildanalytisches Verfahren nach L. Zeman u.a., J. Membrane Science 71 (1992), 221-231 eingesetzt. Dieses eignet sich für einen Porengrößenbereich zwischen 0,1 µm und 10 µm, naturgemäß sowohl für isotrope als auch für anisotrope Porenstrukturen.

Es ist für Anwendungen der erfindungsgemäßen Vorrichtung bzw. des erfindungsgemäßen Verfahrens für Flüssigkeiten wie insbesondere klare Lösungen oder Suspensionen vorteilhaft, wenn die Membranen in mindestens 80 % ihrer Dicke einen im wesentlichen konstanten mittleren Porendurchmesser aufweisen. Hierdurch läßt sich eine hohe innere Oberfläche, verbunden mit einer großen Anzahl immobilisierter, stoffspezifisch wirkenden Gruppen in den Membranen bei gleichzeitig geringem Druckverlust erzielen. Als ein im wesentlichen konstanter mittlerer Porendurchmesser wird ein solcher verstanden, der sich in der genannten Erstrekkung der Membran um nicht mehr als +/-50 % ändert.

Bei Anwendungen, bei denen das zu behandelnde Fluid eine Suspension ist, weisen die Membranen, aus denen die Behandlungselemente ausgebildet sind, vorteilhafterweise an mindestens einer ihrer Seiten eine Schicht auf, die einen kleineren mittleren Porendurchmesser aufweist als der an die Schicht angrenzende Bereich der Membranen mit im wesentlichen konstantem mittleren Porendurchmesser. In einer bevorzugten Ausführungsform der Erfindung ist diese Schicht zwischen 1 µm und 5 µm dick und weist einen mittleren Porendurchmesser auf, der um den Faktor 5 bis 50 kleiner ist als der mittlere Porendurchmesser im angrenzenden Bereich.

In der erfindungsgemäßen Vorrichtung bzw. zur Durchführung des erfindungsgemäßen Verfahrens werden vorzugsweise poröse Membranen mit großer innerer Oberfläche eingesetzt. Bewährt haben sich poröse Membranen mit einer BET-Oberfläche zwischen 2 und 300 m² je cm³ Membranvolumen, bestens bewährt haben sich solche Membranen mit einer BET-Oberfläche zwischen 8 und 30 m² je cm³ Membranvolumen. Das auf Stickstoffadsorptionsmessung basierende BET-Verfahren zur Bestimmung der Oberfläche poröser Membranstrukturen ist von K. Kaneko, J. Membrane Science 96 (1994), 59-89 beschrieben.

Abhängig von der gewünschten Anwendung der erfindungsgemäßen Vorrichtung bzw. des erfindungsgemäßen Verfahrens können die die ersten Behandlungselemente aufbauenden und die die zweiten Behandlungselemente aufbauenden Membranen gleich sein oder auch unterschiedlich. Unterschiede können sich beispielsweise auf ihre Porenstruktur oder ihre Porendurchmesser beziehen, sie können sich jedoch auch auf-in den Membranen enthaltene Gruppen beziehen, die zur Wechselwirkung mit in dem zu behandelnden Fluid enthaltenen Zielsubstanzen bestimmt sind. Darüberhinaus können die Behandlungselemente sich hinsichtlich ihrer Ausführungsformen unterscheiden, wie z.B. hinsichtlich der Größe ihrer Hohlräume.

Auch die die Behandlungselemente verschiedener Stufen aufbauenden Membranen können je nach Anwendung gleich oder unterschiedlich sein. Sie können sich hinsichtlich ihrer Porenstrukturen oder hinsichtlich ihrer Porendurchmesser unterscheiden. Wie ausgeführt kann der Porendurchmesser der Membranen beispielsweise bei der stoffspezifischen Behandlung von Suspensionen zur Fraktionierung der suspendierten Partikel eine in Richtung der Durchströmung des Gehäuses der erfindungsgemäßen Vorrichtung von Stufe zu Stufe abnehmende Größe aufweisen. Es können in unterschiedlichen Stufen auch Behandlungselemente aus unterschiedlichen Membranformen eingesetzt werden, auf die im folgenden noch eingegangen wird. Natürlich können die in unterschiedlichen Stufen verwendeten Membranen sich auch hinsichtlich immobilisierter, stoffspezifisch wirkender Gruppen unterscheiden, die dann mit verschiedenen Zielsubstanzen wechselwirken können.

Im Rahmen der vorliegenden Erfindung werden bevorzugt Hohlfasermembranen oder Flachmembranen eingesetzt, um die Behandlungselemente auszubilden. Es sind aber auch andere Membranformen wie z.B. Membranschläuche oder Membranrohre eingeschlossen.

Im Falle der bevorzugten Verwendung von Hohlfasermembranen ist die Wand der Hohlfasermembran gleichzeitig auch Wand des mindestens einen Hohlraums der Behandlungselemente und die Hohlfasermembran an einem Ende verschlossen. Der Hohlraum wird durch das Lumen der Hohlfasermembran ausgebildet und von der Innenseite der Hohlfasermembran begrenzt.

Aus Hohlfasermembranen lassen sich auf einfache Weise Behandlungselemente im Sinne der vorliegenden Erfindung herstellen. Durch Verschließen eines Endes von Hohlfasermembranstücken, beispielsweise durch Abschweißen, lassen sich Behandlungselemente mit an einer Seite geöffnetem Hohlraum herstellen. Es ist jedoch auch möglich, das eine Ende eines Hohlfasermembranstückes mittels eines Stopfens oder mittels eines Klebers zu verschließen. In diesem Fall wird das eine, das geschlossene Ende des Behandlungselements durch das Hohlfasermembranende selbst zusammen mit dem Stopfen bzw. Kleber ausgebildet.

Durch Falten von Hohlfasermembranstücken quer zur Längsachse entstehen je nach Ausführung Behandlungselemente mit zwei einseitig geöffneten Hohlräumen oder Behandlungselemente mit einem Hohlraum, der zwei in die gleiche Richtung weisende Öffnungen besitzt. Derartige Behandlungselemente sind, wenn sie als erste Behandlungselemente dienen, so in das Gehäuse der erfindungsgemäßen Vorrichtung einzubringen, daß die Öffnungen in Richtung der Einlaßeinrichtung der Vorrichtung weisen. Wenn sie als zweite Behandlungselemente eingesetzt werden, sind sie so in das Gehäuse der erfindungsgemäßen Vorrichtung einzubringen, daß die Öffnungen in Richtung der Auslaßeinrichtung der Vorrichtung weisen.

Es können Hohlfasermembranen mit verschiedenen äußeren Konturen, d.h. mit im Querschnitt betrachtet verschiedenen äußeren Umrissen eingesetzt werden. Die Hohlfasermembranen können beispielsweise eine im wesentlichen runde bzw. kreisförmige, dreieckige, viereckige, sechseckige oder achteckige Kontur aufweisen, sie können auch oval, elliptisch, dreilappig, vierlappig usw. ausgebildet sein. Bevorzugt werden Konturen, mit denen sich hohe Füllgrade realisieren lassen, wie näherungsweise dreieckige, rechteckige, quadratische oder auch sechseckige Konturen.

Für den Einsatz in der erfindungsgemäßen Vorrichtung bzw. zur Durchführung des erfindungsgemäßen Verfahrens haben sich Hohlfasermembranen bewährt, die eine Wandstärke zwischen 15 µm und 900 µm aufweisen, bestens bewährt haben sich Hohlfasermembranen mit einer Wandstärke zwischen 100 µm und 300 µm. Vorzugsweise beträgt der hydraulische Durchmesser des Lumens der eingesetzten Hohlfasermembranen 50 µm bis 900 µm, besonders bevorzugt sind Hohlfasermembranen mit einem hydraulischen Durchmesser des Lumens zwischen 100 µm und 400 µm.

Zur Erleichterung der Handhabung sind die Hohlfasermembranen einer Gruppe von nebeneinander liegenden Behandlungselementen vorteilhafterweise mittels textiler Fäden in mindestens eine Hohlfasermatte mit im wesentlichen zueinander parallelen Hohlfasermembranen eingebunden. Derartige Matten lassen sich nach bekannten Verfahren als Wirkmatte, Webmatte oder Webbändchen, aber auch als Strick- oder als Häkelmatte herstellen. In den Fällen des Webens oder Wirkens sind die textilen Fäden die quer zu den Hohlfasermembranen verlaufenden Web- bzw. Wirkfäden. Mittels derartiger Matten lassen sich Gruppen von nebeneinanderliegenden Behandlungselementen herstellen, die einen hohen Ordnungsgrad und gleichzeitig eine hohe Packungsdichte aufweisen.

Bevorzugt werden dabei die Hohlfasermembranen als erste und zweite Behandlungselemente so in den Matten angeordnet, daß diese Gruppen Paare aus ersten und zweiten Behandlungselementen enthalten. Hierzu hat sich bewährt, wenn entsprechend bemessene Hohlfasermembranen mit einseitig geöffneten Hohlräumen so parallel zueinander in die Matte eingebunden werden, daß die Öffnungen der Hohlräume benachbarter Hohlfasermembranen auf entgegengesetzten Seiten der Hohlfasermatte angeordnet sind. Auf diese Weise enthält eine solche Hohlfasermatte Paare aus ersten und zweiten Behandlungselementen.

Aus derartigen Hohlfasermatten hergestellte Gruppen von Behandlungselementen umfassen mindestens eine solchermaßen ausgebildete Hohlfasermatte, die nach bekannten Verfahren spiralförmig um eine Wickelachse oder einen Kern parallel zu den Hohlfasermembranen und im wesentlichen parallel zur Erstreckung des Gehäuses zwischen Einlaßeinrichtung und Auslaßeinrichtung gewickelt ist. Gemäß einer weiteren erfindungsgemäßen Ausführung sind derartige Matten lagenweise zu Stapeln von einzelnen Mattenlagen oder gefalteten Mattenlagen aufeinandergeschichtet, wobei die Hohlfasermembranen im resultierenden Stapel vorzugsweise parallel zueinander angeordnet sind.

Besonders bevorzugt werden in einer Hohlfasermatte Hohlfasermembranen mit einseitig geöffneten Hohlräumen so eingebunden, daß die Öffnungen aller Hohlräume auf der gleichen Seite der Hohlfasermatte angeordnet sind. Derartige Hohlfasermatten lassen sich vorteilhaft zu Gruppen von zueinander benachbarten ersten und zweiten Behandlungselementen weiterverarbeiten, indem mehrere Matten als Lagen so aufeinandergestapelt werden, daß sich die geschlossenen Enden der Hohlfasermembranen von Lage zu Lage alternierend auf gegenüberliegenden Seiten des Stapels befinden. Vorzugsweise werden auch aus diesen Matten gefertigte spiralförmig gewickelte Gruppen von ersten und zweiten Behandlungselementen verwendet, die aus mindestens einem Paar dieser Matten bestehen, bei dem die Matten eines Paares so aufeinandergelegt sind, daß die Öffnungen der Hohlfasermembranen der ersten Matte und die Öffnungen der Hohlfasermembranen der zweiten Matte auf entgegengesetzten Seiten liegen, und wobei das mindestens eine Paar spiralförmig um eine Wickelachse parallel zu den Hohlfasermembranen und parallel zur Erstreckung des Gehäuses zwischen Einlaßeinrichtung und Auslaßeinrichtung gewickelt ist.

Matten mit einseitig geschlossenen Hohlfasermembranen lassen sich beispielsweise aus mäanderförmig gewebten oder gewirkten Hohlfasermembranmatten herstellen, an deren Seitenkanten die Hohlfasermembranen im Bogen verlaufen und die daher an diesen Kanten zunächst geschlossen sind. Durch Abschneiden der Endbögen an einer Kante einer solchen Matte können die Hohlfasermembranen einseitig geöffnet werden. Vorzugsweise wird jedoch eine solche mäanderförmig gewebte oder gewirkte Matte aus Hohlfasermembranen mittig geteilt, so daß zwei Hälften mit Hohlfasermembranen entstehen, deren Hohlräume einseitig geöffnet sind. Nach Übereinanderschieben der beiden Hälften erhält man in einfacher Weise einen Mattenaufbau mit zwei Lagen, bei denen die geöffneten Enden der Hohlfasermembranen auf gegenüberliegenden Seiten liegen. Dieser doppellagige Mattenaufbau kann beispielsweise durch Stapeln oder spiralförmiges Wickeln weiterverarbeitet werden.

Auch Membranhohlfaserelemente mit mehr als einem durchgehenden, sich längs der Hohlfaserachse erstreckenden Hohlraum, wie sie in der DE-OS 30 22 313 beschrieben werden, die auch als Membranhohlfaserketten mit mehreren zueinander parallelen Hohlräumen ausgebildet sein können, wie sie z. B. die DE-OS 28 42 835 offenbart, lassen sich zur Herstellung von Gruppen von ersten und zweiten Behandlungselementen verwenden. Aus entsprechend in der Länge bemessenen Membranhohlfaserkettenabschnitten lassen sich z.B. durch einfaches Aufeinanderstapeln mehrerer dieser Kettenabschnitte als Lagen ebenfalls Gruppen aus ersten und zweiten Behandlungselementen herstellen, wenn die einzelnen Ketten an ihrem einen Ende verschlossen sind, die Längsachsen der Hohlräume in den Ketten des Stapels im wesentlichen zueinander parallel sind und die verschlossenen Enden aufeinanderfolgender Lagen sich an entgegengesetzten Enden des Stapels befinden. Insbesondere wenn die einzelnen Membranhohlfaserketten hinsichtlich ihrer Außenkontur eine angenähert rechteckige Form aufweisen, lassen sich Gruppen aus Behandlungselementen mit sehr geringen Abständen zwischen den Behandlungselementen aufbauen und somit hohe Füllgrade ε realisieren.

Die beschriebenen Gruppen von Hohlfasermembranen werden so in das Gehäuse der erfindungsgemäßen Vorrichtung eingebracht, daß die Hohlfasermembranen parallel zur Gehäuseachse angeordnet sind. Dabei werden die Hohlfasermembran-Behandlungselemente, deren Öffnungen zur Einlaßeinrichtung weisen, zu ersten Behandlungselementen und diejenigen, deren Öffnungen zur Auslaßeinrichtung weisen, zu zweiten Behandlungselementen.

Gemäß einer weiteren bevorzugten Ausführungsform der Erfindung sind die Behandlungselemente aus mindestens einer Flachmembran gebildet. Derartige Behandlungselemente aus Flachmembranen lassen sich beispielsweise durch U-förmiges Falten von vorzugsweise rechteckigen oder quadratischen Stücken einer Flachmembran herstellen. Die bei der U-förmigen Faltung eines solchen Stücks einer Flachmembran entstehenden zwei Schenkel werden mittels Abstandshalter auf Abstand gehalten und bilden so zusammen mit der geschlossenen Faltkante den Hohlraum aus.

Gemäß einer weiteren vorteilhaften Ausgestaltung der Erfindung werden zur Bildung eines Behandlungselements aus Flachmembranen zwei gleich große, zueinander im wesentlichen parallele und gegeneinander durch Abstandshalter beabstandete Flachmembranen, die so zueinander angeordnet sind, daß ihre Kanten parallel zueinander verlaufen, an einer Kante formschlüssig miteinander verbunden, beispielsweise miteinander verschweißt oder verklebt, so daß durch die Flachmembranstücke die Schenkel des Behandlungselements ausgebildet werden. Der Hohlraum wird wiederum durch die Schenkel und die formschlüssig verbundene Kante ausgebildet.

Die beiden eingesetzten Flachmembranstücke können gleich sein, sie können jedoch auch unterschiedlich sein z.B. im Hinblick auf ihr Material, ihre Struktur oder die zur Wechselwirkung mit Zielsubstanzen vorgesehenen stoffspezifisch wirkenden Gruppen. Auch kann eine der beiden Flachmembranen gegen eine beispielsweise fluidundurchlässige Folie eingetauscht werden, wo dies - etwa aus Gründen der Stabilität der Behandlungselemente oder aus Fertigungsgesichtspunkten - günstig erscheint.

Die Abstandshalter, die, wie beschrieben, für einen definierten Abstand zwischen den Schenkeln der aus Flachmembranen und gegebenenfalls Folien ausgebildeten Behandlungselemente sorgen und gleichzeitig fluiddurchlässig sein sollen, können als separate Elemente ausgebildet sein. Als Abstandshalter kann ein für Fluide durchlässiges Material wie z.B. ein Vlies oder ein Gewebe eingesetzt werden. Die Abstandshalterfunktion auf der Innenseite der Membran kann jedoch auch in die Membran bzw. die Folie selbst integriert werden z.B. durch rillenförmige, noppenförmige oder andere profilierte Oberflächenstrukturen.

Die in der erfindungsgemäßen Vorrichtung bzw. zur Durchführung des erfindungsgemäßen Verfahrens eingesetzten Flachmembranen weisen vorzugsweise eine Wandstärke zwischen 15 µm und 500 µm auf, besonders bevorzugt sind Flachmembranen mit einer Wandstärke zwischen 100 µm und 300 µm.

Die beiden an die Faltkante bzw. die formschlüssig verschlossene Kante angrenzenden Seiten des Behandlungselements sind zweckmäßigerweise z.B. durch Verschweißen ebenfalls verschlossen. Seitlich offene Behandlungselemente aus Flachmembranen sind wegen möglicher Leck- und Kurzschlußströme bei der Anwendung nicht empfehlenswert.

Solchermaßen hergestellte Behandlungselemente können in ebener Form eingesetzt werden. Diese werden in Gruppen von ersten und zweiten Behandlungselementen stapelförmig nebeneinandergeschichtet und in das Gehäuse der Vorrichtung eingebracht. Dabei weist die Faltkante oder formschlüssig verbundene Kante der ersten Behandlungselemente erfindungsgemäß in Richtung der Auslaßeinrichtung der Vorrichtung, und der zwischen den Schenkeln eines jeweiligen ersten Behandlungselementes ausgebildete Hohlraum ist in Richtung der Einlaßeinrichtung geöffnet. Die Faltkante oder formschlüssig verbundene Kante der zweiten Behandlungselemente weist entsprechend in Richtung der Einlaßeinrichtung der Vorrichtung, und der zwischen den Schenkeln eines jeweiligen zweiten Behandlungselementes ausgebildete Hohlraum ist in Richtung der Auslaßeinrichtung geöffnet. Bevorzugt enthalten die so stapelförmig aufgebauten Gruppen eine alternierende Abfolge von ersten und zweiten Behandlungselementen, so daß diese ersten und zweiten Behandlungselemente paarweise einander zugeordnet werden können.

Bewährt hat sich eine Ausführungsform, bei der die der Einlaßeinrichtung bzw. der Auslaßeinrichtung zugewandten Faltkanten bzw. formschlüssig miteinander verbundenen Kanten der Behandlungselemente zweier aufeinanderfolgender Stufen der erfindungsgemäßen Vorrichtung in Richtung der Erstreckung des Gehäuses zwischen Einlaßeinrichtung und Auslaßeinrichtung gesehen einen Winkel zwischen 5° und 175° ausbilden. Bevorzugt sind die Winkel 30°, 45 ° oder 90°. Auf diese Weise wird eine bessere Strömungsverteilung nach jeder Stufe erreicht, da ein Abdecken der Öffnungen der ersten Behandlungselemente der jeweils nachfolgenden Stufe vermieden und die Ausbildung einer über alle Stufen hinweggehenden Randströmung zwischen Behandlungselementen und Gehäuseinnenwand unterbrochen wird.

Die beschriebenen flachen Behandlungselemente lassen sich auch zu spiralförmig gewickelten Gruppen von Behandlungselementen weiterverarbeiten. Hierzu wird eine Gruppe von mindestens zwei ebenen Behandlungselementen bevorzugt so aufeinandergestapelt, daß Faltkanten bzw. formschlüssig miteinander verbundene Kanten der Behandlungselemente auf gegenüberliegenden Seiten des Stapels liegen. Dieser Stapel wird anschließend beispielsweise um eine Wickelachse oder einen Wickelkern senkrecht zu den Faltkanten bzw. den formschlüssig verbundenen Kanten spiralförmig gewickelt. Besonders bevorzugt wird eine Ausführungsform mit mindestens einem Paar von Behandlungselementen aus Flachmembranen, die so aufeinandergelegt sind, daß sich die geschlossenen Kanten auf gegenüberliegenden Seiten befinden. Dieses mindestens eine Paar aus einem ersten und einem zweiten Behandlungselement wird dann spiralförmig um eine zu den durch Falten oder formschlüssiges Verbinden geschlossenen Kanten senkrechte und zur Richtung der Erstreckung des Gehäuses zwischen Einlaßeinrichtung und Auslaßeinrichtung im wesentlichen parallele Wickelachse oder einen Wickelkern gewickelt.

Vorteilhafterweise liegen die dabei entstehenden einzelnen Wikkellagen direkt aneinander, so daß über eine Flächenpressung zwischen den Wickellagen beim Einsatz der erfindungsgemäßen Vorrichtung ein möglicher Leckstrom zwischen den Behandlungselementen minimiert wird. Solche spiralförmig gewickelten Gruppen von Behandlungselementen werden dann vorteilhafterweise so im Gehäuse einer erfindungsgemäßen Vorrichtung angeordnet, daß die Richtung der Wickelachse und die Erstreckung des Gehäuses zwischen Einlaßeinrichtung und Auslaßeinrichtung übereinstimmen.

Aus zwei Flachmembranen oder vorzugsweise auch aus einer Flachmembran und einer Folie lassen sich auch auf einfache Weise Behandlungselementeeinheiten mit in Anströmrichtung mehreren hintereinanderliegenden, einseitig geöffneten Hohlräumen herstellen. Durch entsprechende Kombination derartiger Behandlungselementeeinheiten können mehrere Stufen von ersten und zweiten Behandlungselementen zusammengefaßt werden.

Solche Behandlungselementeeinheiten lassen sich beispielsweise dadurch herstellen, daß eine entsprechend in ihrer Länge in Durchströmrichtung des Gehäuses der erfindungsgemäßen Vorrichtung, d.h. in ihrer Längserstreckung bemessene Flachmembran zusammen mit einer gleichgroßen Folie und einem dazwischenliegenden fluiddurchlässigen Abstandshalter übereinandergelegt werden. Die Flachmembran wird entlang ihrer Längserstreckung an mehreren Stellen, die vorteilhafterweise gleichen Abstand zueinander aufweisen, quer zur Längserstreckung durchgeschnitten. Zur Ausbildung von ersten Behandlungselementen werden die in Richtung zur Einlaßeinrichtung liegenden Schnittkanten zusammen mit dem Abstandshalter mit der Folie z.B. durch Verschweißen oder Verkleben formschlüssig und fluiddicht verbunden. Auf diese Weise werden in Richtung der Auslaßeinrichtung geschlossene Hohlräume ausgebildet, deren einer Schenkel von der durchgehenden Folie und deren zweiter Schenkel von der durch Schnitte unterbrochenen Flachmembran ausgebildet sind. Die in Richtung zur Auslaßeinrichtung liegenden Schnittkanten bleiben frei und bilden zusammen mit dem Abstandshalter die Öffnungen der Hohlräume der so entstehenden ersten Behandlungselemente.

Zur Ausbildung einer Behandlungselementeeinheit mit zweiten Behandlungselementen werden entsprechend die in Richtung zur Auslaßeinrichtung liegenden Schnittkanten zusammen mit dem Abstandshalter mit der Folie z.B. durch Verschweißen oder Verkleben formschlüssig und fluiddicht verbunden, um auf diese Weise in Richtung der Einlaßeinrichtung geschlossene Hohlräume auszubilden. Die in Richtung zur Einlaßeinrichtung liegenden Schnittkanten hingegen bleiben frei und bilden zusammen mit dem Abstandshalter die Öffnungen der Hohlräume der so entstehenden zweiten Behandlungselemente aus.

Eine so hergestellte Behandlungselementeeinheit mit ersten Behandlungselementen wird mit einer entsprechenden Einheit mit zweiten Behandlungselementen paarweise so kombiniert, daß aneinandergereihte Paare aus einem ersten und einem zweiten Behandlungselement entstehen. Hierzu werden die Behandlungeselementeeinheiten so zueinander angeordnet, daß die jeweils von den Flachmembranen ausgebildeten Schenkel der ersten und der zweiten Behandlungselemente einander zugewandt sind und die Öffnungen der Hohlräume des ersten Behandlungselements und die geschlossenen Enden der Hohlräume des zweiten Behandlungselements sich auf im wesentlichen gleicher Höhe befinden, was gleichzeitig bedeutet, daß die ersten und zweiten Behandlungselemente jeweils gleich lang sind. Aus solchen Paaren von Behandlungselementeeinheiten lassen sich durch Aufeinanderstapeln mehrerer dieser Paare oder durch spiralförmiges Aufwickeln mindestens eines solchen Paares auf einfache Weise Behandlungseinheiten mit mehreren integrierten Stufen von Behandlungselementen herstellen.

Durch entsprechende Änderungen in der Abfolge der freien Schnittkanten und der mit der Folie verbundenen Schnittkanten können natürlich auch Behandlungselementeeinheiten hergestellt werden, die in Anströmrichtung eine alternierende Abfolge von ersten und zweiten Behandlungselementen aufweisen. Solche Behandlungselementeeinheiten werden dann ebenfalls so miteinander paarweise kombiniert, daß Paare aus nebeneinanderliegenden ersten und zweiten Behandlungselmenten gebildet werden. Vorzugsweise werden jedoch Behandlungselementeeinheiten verwendet, die jeweils nur erste oder nur zweite Behandlungselemente aufweisen.

Natürlich ist es auch möglich, anstelle der Folie eine zweite Flachmembran einzusetzen.

Bei Verwendung von Behandlungselementen aus Flachmembranen wie auch bei der Verwendung von Behandlungselementen aus Hohlfasermembranen sind verschiedene Maßnahmen anwendbar, um die bevorzugt gewünschten hohen Füllgrade ε und/oder eine Minimierung von Leckströmen zwischen den Behandlungselementen zu erzielen.

So ist es natürlich zweckmäßig, bei Stapeln von nebeneinander angeordneten ebenen Flachmembran-Behandlungselementen diese zur Erzielung der erfindungsgemäß bevorzugten hohen Füllgrade so anzuordnen, daß die Außenseiten der nebeneinandergeschichteten Behandlungselemente direkt aneinanderliegen. Gleiches gilt für spiralförmig gewickelte Behandlungselemente aus Flachmembranen, die zweckmäßigerweise so gewickelt werden, daß die einzelnen Wickellagen sich berührend direkt aneinanderliegen. Auf diese Weise kann auch der Leckstrom durch die Zwischenräume zwischen den Behandlungselementen in ausreichendem Maße minimiert werden.

In Spezialfällen können die Behandlungselemente zur weiteren Minimierung des Leckstroms an ihrer Außenseite auch "Dichtlippen" aufweisen. Diese können beispielsweise durch Beilegen eines monofilen Fadens senkrecht zur Richtung der Strömung zwischen Einlaßeinrichtung und Auslaßeinrichtung ausgebildet sein, so daß durch die Preßkraft, mit der nebeneinandergeschichtete Behandlungselemente zusammengehalten werden, sich der härtere monofile Faden in die weichere Membranstruktur eindrückt und so für eine Abdichtung sorgt. Die Funktion eines solchen Fadens kann aber auch durch eine entsprechende Formgebung in einer der Membranaußenseiten bzw. Folienaußenseiten integriert sein. In weiteren Sonderfällen ist jedoch auch möglich, eine Abdichtung zwischen den Behandlungselementen über eine Verklebung der Außenseiten der Behandlungselemente etwa in Form eines Silikonstreifens zu erreichen.

Derartige zusätzliche Abdichtungen sind auch bei Behandlungselementen aus Hohlfasermembranen denkbar, um die zwischen den Hohlfasern auftretenden Zwickelbereiche abzudichten. Eine Minimierung der Leckströme, aber auch eine Erhöhung der Füllgrade ε läßt sich bei Behandlungselementen aus Hohlfasermembranen auch durch eine geeignete Verformung der verwendeten Hohlfasermembranen erzielen. So können beispielsweise Hohlfasermembranen mit runder Kontur in eine genähert rechteckige Form überführt werden, wenn man etwa eine Hohlfasermatte mit runden Hohlfasern kalandriert. Mit rechteckigen Hohlfasermembranen lassen sich höhere Füllgrade erzielen.

Eine weitere Möglichkeit besteht darin, die Behandlungselemente einem Quellvorgang zu unterziehen. Eine solche Quellung, die sich sowohl für Behandlungselemente aus Hohlfasermembranen als auch für solche aus Flachmembranen durchführen läßt, kann nach Einbringen der Gruppen von Behandlungselementen in das Gehäuse der erfindungsgemäßen Vorrichtung beispielsweise während einer dann durchgeführten chemischen Kopplung von stoffspezifisch wirkenden Gruppen in den Membranen stattfinden.

Bei Einsatz von Behandlungselementen aus Flachmenbranen können auch zwischen die ersten und zweiten Behandlungselemente flächige Zwischenelemente eingebracht werden, die zumindest senkrecht zu ihrer flächigen Erstreckung fluiddurchlässig sind. Diese Zwischenelemente können in Form von Vliesen oder gleichfalls als Flachmembranen vorliegen und bei entsprechender Ausführung ebenfalls zu einer stoffspezifischen Behandlung des zu behandelnden Fluids beitragen.

Die Form des inneren Querschnitts des Gehäuses, in dem die zu Gruppen zusammengefaßten Behandlungselemente oder die Stufen von Behandlungeselementen angeordnet sind, kann beliebig sein. Bevorzugt werden jedoch bei Hohlfasermembranen und Flachmembranen Gehäuse mit quadratischem, rechteckigem, sechseckigem, achteckigem oder auch rundem Innenquerschnitt verwendet.

In diese Gehäuse werden die Gruppen von Behandlungselementen, die bevorzugt eine elastische Komponente aufweisen, unter einer geringen Kompression eingebracht und unter Entspannung im Gehäuse positioniert.

Bei Flachmembranen werden daher als die Hohlräume abstützende Abstandshalter, beispielsweise in Form von flächigen Geweben oder Vliesen, solche eingesetzt, die eine senkrecht zu ihrer Fläche wirkende Elastizität aufweisen. Bei Behandlungselementen aus Flachmembranen wie auch bei solchen aus Hohlfasermembranen ist es jedoch zweckmäßig, wenn die Membranen selbst elastisch komprimierbar sind bzw. bei Hohlfasermembranen auch eine Deformation des Querschnitts möglich ist.

Bei Behandlungselementen aus Hohlfasermembranen kann je nach Anwendung auch eine gröbere Spritzennadel oder eine Kanüle mit größerem Durchmesser als Gehäuse geeignet sein, in der z.B. auch mehrere Stufen von Behandlungselementen hintereinander angeordnet sind. Für andere Anwendungen hat sich ein biegsames Gehäuse z.B. aus einem elastischen Schlauch bewährt. Das Gehäuse kann zum leichteren Einbringen der Gruppen oder Stufen von Behandlungselementen auch radial schrumpfbar ausgebildet sein, wobei die Schrumpfung nach Einbringen der Behandlungselemente vorgenommen wird. Besonders bei langen Gehäusen relativ zu ihrem Durchmesser kann es vorteilhaft sein, das Gehäuse beispielsweise wendelförmig oder spiralförmig zu wickeln bzw. zu formen. Auch können mehrere Gehäusesegmente geradlinig oder mäanderförmig hintereinander angeordnet sein.

Eine feste Verbindung zwischen den Behandlungselementen und der Gehäuseinnenwand erübrigt sich in der Regel. Es ist jedoch in Sonderfällen auch möglich z.B. mittels Polyurethan, Epoxidharz, Thermoplast oder dergleichen die der Gehäuseinnenwand benachbarten Behandlungselemente einer Stufe mit der Gehäuseinnenwand zu verbinden. Auf diese Weise kann für eine stabile Positionierung der jeweiligen Gruppe von Behandlungselementen im Gehäuse gesorgt werden, vor allem aber läßt sich so eine unerwünschte Randströmung zwischen Gehäuseinnenwand und Behandlungselementen zumindest verringern, und Ungenauigkeiten in der Außenkontur von Gruppen von Behandlungselementen können ausgeglichen werden. Ferner können dadurch beispielsweise die beschriebenen Flachmembran-Behandlungselemente an ihren Stirnseiten, d.h. an den an die Faltkante bzw. formschlüssig verbundene Kante angrenzenden Kanten abgedichtet werden. Geeignete Methoden, so die Behandlungselemente mit den Gehäuse zu verbinden sind beispielsweise in der EP-A-521 495 beschrieben.

Aufgrund der beschreibenen Ausführung der erfindungsgemäßen Vorrichtung ergibt sich als ein wesentlicher Vorteil der erfindungsgemäßen Vorrichtung die lineare Vergrößerbarkeit. Hierunter ist zu verstehen, daß die lokalen Verhältnisse der stoffspezifischen Behandlung in einer Vorrichtung mit einem Gehäuse kleinen Durchmessers denen in einer Vorrichtung mit einem Gehäuse großen Durchmessers entsprechen, wenn der Volumenstrom des zu behandelnden Fluids proportonal zur Querschnittsfläche des Gehäuses vergrößert wird.

Die erfindungsgemäße Vorrichtung bzw. das erfindungsgemäße Verfahren kann mit Erfolg zu verschiedensten stoffspezifischen Behandlungen von Fluiden eingesetzt werden. In einer vorteilhaften Ausgestaltung der erfindungsgemäßen Vorrichtung bzw. des erfindungsgemäßen Verfahrens sind auf und/oder in der mindestens einen Membran bevorzugt stoffspezifisch wirkende Gruppen immobilisiert, die mit in dem zu behandelnden Fluid enthaltenen Zielsubstanzen wechselwirken. Im Hinblick auf das jeweilige Behandlungsverfahren können auch mehrere verschiedene stoffspezifisch wirkende Gruppen auf und/oder in der ein Behandlungselement aufbauenden mindestens einen Membran immobilisiert sein, die spezifisch mit verschiedenen Zielsubstanzen wechselwirken. Es können auch unterschiedliche Membranen mit unterschiedlichen stoffspezifisch wirkenden Gruppen zusammen eingesetzt werden, wenn es die Anwendung erfordert. Auf diese Weise können in den ersten und in den zweiten Behandlungselementen unterschiedliche stoffspezifische Behandlungen erfolgen und/oder unterschiedliche stoffspezifische Behandlungen in den einzelnen Stufen einer mehrere Stufen von Behandlungselementen enthaltenden Vorrichtung durchgeführt werden.

So gibt es Anwendungen, bei denen eine Gruppe von zu entfernenden Zielsubstanzen beispielsweise teilweise positiv als auch zum anderen Teil negativ geladen sind. Derartige Gruppen von Zielsubstanzen können aus dem zu behandelnden Fluid entfernt werden, indem zur Durchführung des erfindungsgemäßen Verfahren Membranen mit unterschiedlicher Ladung eingesetzt werden, etwa in der Weise, daß die Membranen unterschiedlicher Stufen von Behandlungselementen stoffspezifisch wirkende Gruppen mit unterschiedlicher Ladung aufweisen.

Als Beispiel sei die Entfernung cytokin-induzierender Substanzen aus Infusionslösungen oder Dialysat genannt. Es ist bekannt, daß diese cytokin-induzierenden Substanzen sowohl positiv als auch negativ geladen sind. Der Kontakt dieser Substanzen mit weißen Blutzellen stimuliert diese zur Produktion von Cytokinen mit unerwünschten Nebeneffekten für den Patienten.

Durch Hintereinanderschaltung von Behandlungselemente-Stufen mit anionischen und kationischen Eigenschaften in einer entsprechenden erfindungsgemäßen Vorrichtung kann die gesamte Zielgruppe adsorptiv entfernt werden.

Gemäß einer weiteren vorteilhaften Ausführung des erfindungsgemäßen Verfahrens erfolgt die stoffspezifische Behandlung aufgrund der spezifischen Größe von im zu behandelnden Fluids enthaltenen Zielsubstanzen. Beispielsweise kann auch bei Verwendung einer Vorrichtung mit mehreren hintereinander angeordneten Stufen von Behandlungselementen eine Fraktionierung von im zu behandelnden Fluid enthaltenen Zielsubstanzen entsprechend ihrer Teilchengröße durchgeführt werden, wenn die die Behandlungselemente aufbauenden Membranen einen in Richtung der Durchströmung des Gehäuses von Stufe zu Stufe abnehmenden Porendurchmesser aufweisen. Bei einer anschließenden Elution unter Umkehrung der Richtung der Durchströmung des Gehäuses werden die verschiedenen Größenfräktionen wie in einer chromatographischen Säule zu unterschiedlichen Zeiten eluiert und damit voneinander getrennt.

Das erfindungsgemäße Verfahren hat sich ebenfalls bewährt bei solchen stoffspezifischen Behandlungen, bei denen eine Kombination sowohl von Behandlungen aufgrund der spezifischen Größe von im zu behandelnden Fluid enthaltenen Zielsubstanzen als auch von solchen aufgrund von spezifischen Wechselwirkungen zwischen immobilisierten Gruppen auf und/oder in der mindestens einen Membran und Zielsubstanzen im Fluid vorliegt.

Eine solche Anwendung des erfindungsgemäßen Verfahrens ist beispielsweise das HELP-Verfahren, wie es auch von D. Seidel, Therapeutische Rundschau, 47 (1990), 514-519, beschrieben wird. Bei diesem Verfahren muß in einem ersten Schritt Heparin-LDL-Preziptat abfiltriert werden und in einem zweiten Schritt Heparin aus dem Filtrat spezifisch adsorbiert werden. Dieses kann beispielsweise so realisiert werden, daß die ersten Behandlungselemente als reiner dead-end Filter ausgelegt werden und in ihren Hohlräumen der Filterkuchen aus Heparin-LDL-Prezipitat aufgenommen wird. Um hierfür eine entsprechende Kapazität bereitzustellen, werden die Hohlräume der ersten Behandlungselemente entsprechend groß ausgeführt. Die zweiten Membranelemente werden mit stoffspezifisch wirkenden Gruppen für die Heparinadsorption ausgerüstet. Natürlich ist es auch möglich, die ersten Behandlungselemente so zu gestalten, daß sie ebenfalls mit stoffspezifischen Gruppen ausgestattet sind, so daß sie außer zur dead-end Filtration auch zur Adsorption von Heparin geeignet sind.

Natürlich sind auch weitere Kombinationen verschiedener stoffspezifischer Behandlungen mittels der erfindungsgemäßen Vorrichtung bzw. mittels des erfindungsgemäßen Verfahrens möglich. In einer bevorzugten Ausgestaltung des erfindungsgemäßen Verfahrens wird das zu behandelnde Fluid rezirkuliert und durchläuft das Behandlungsverfahren mehrfach, bis ein gewünschter Behandlungsgrad erreicht ist.

Gemäß einer besonders bevorzugten Ausgestaltung der Erfindung handelt es sich bei den stoffspezifisch wirkenden Gruppen um Liganden zur affinen Trennung von Ligaten aus zu behandelnden Flüssigkeiten oder um Katalysatoren, wobei unter Katalysatoren auch Biokatalysatoren wie z.B. Enzyme zu verstehen sind. Bevorzugte erfindungsgemäße Verfahren sind Verfahren zur Reinigung/Trennung von Ligaten aus einer ligathaltigen Flüssigkeit, wobei Membranen ausgewählt werden, auf und/oder in denen Liganden für besagte Ligaten immobilisiert sind, desweiteren Verfahren zur katalytischen Behandlung von Fluiden, wobei Membranen ausgewählt werden, auf und/oder in denen Katalysatoren immobilisiert sind. Zu den katalytischen Verfahren zählen auch biokatalytische Verfahren wie z.B. enzymatische Verfahren.

Zur Immobilisierung stoffspezifisch wirkender Gruppen auf und/oder in den Membranen können die in der Literatur beschriebenen Verfahren eingesetzt werden. Auch hinsichtlich der in Bezug auf die jeweilige stoffspezifische Fluidbehandlung verwendbaren stoffspezifisch wirkenden Gruppen kann auf die in der Literatur beschriebenen zurückgegriffen werden. Verschiedene Möglichkeiten der Immobilisierung der stoffspezifisch wirkenden Gruppen kommen in Betracht, sowohl in Bezug auf den Ort, wo sie immobilisiert sind, als auch in Bezug auf die Art und Weise ihrer Immobilisierung.

So können diese stoffspezifisch wirkenden Gruppen an die Membran adsorptiv oder über kovalente Bindungen gekoppelt sein. Diese Kopplung an die Membran kann sowohl vor Einbau in das Gehäuse als auch nach Einsetzen der Membran als Behandlungselement in das Gehäuse der erfindungsgemäßen Vorrichtung erfolgen. Hierbei können in Abstimmung auf den jeweiligen Anwendungsfall die stoffspezifisch wirkenden Gruppen beispielsweise im wesentlichen homogen an die gesamte Oberfläche der porösen Membran, d.h. sowohl an die äußeren als auch an die inneren, durch die Poren gebildeten Oberflächen gekoppelt, d.h. auf und in der Membran immobilisiert sein. Es kann aber auch erforderlich sein, daß die stoffspezifisch wirkenden Gruppen nur an einen Teil dieser Oberflächen immobilisiert sind, etwa wenn einzelne Bestandteile des zu behandelnden Fluids nicht mit den stoffspezifisch wirkenden Gruppen in Kontakt kommen sollen. In einem solchen Fall ist es zweckmäßig, zum einen durch Auswahl einer Membran mit einer geeigneten Trenngrenze einen Transport dieser Bestandteile durch die Membran zu den immmobilisierten stoffspezifisch wirkenden Gruppen zu vermeiden. Zum anderen ist es dann auch erforderlich, die der Zustromseite zugewandte Oberfläche und damit die dem diese Bestandteile noch enthaltenden Fluid zugewandte Oberfläche der Membran bzw. des Behandlungselements frei von stoffspezifisch wirkenden Gruppen zu halten. Dies kann etwa durch Passivierung dieser Oberfläche z.B. durch eine chemische Vorbehandlung oder eine Plasmabehandlung vor Ankopplung der stoffspezifisch wirkenden Gruppen erreicht werden.

Es kann auch ein direkter Einbau von stoffspezifisch wirkenden Gruppen in die Membranmatrix erfolgen, im Falle von Membranen aus polymeren Materialien etwa durch Modifikation des Polymermaterials mit beispielsweise ionischen, hydrophilen oder hydrophoben Gruppen oder durch Einsatz von Polymerblends, bei denen mindestens eine Polymerkomponente stoffspezifisch wirkende Gruppen aufweist.

Eine weitere Möglichkeit besteht darin, stoffspezifisch wirkende Gruppen oder auch solche Gruppen aufweisende Trägersubstanzen oder Partikel in das Porensystem einer Membran beim Herstellungsverfahren der Membran einzulagern oder nachträglich in die fertige Membran z.B. einzuschwemmen. In letzterem Fall weist die Membran zweckmäßigerweise eine asymmetrische Struktur sowie gegebenenfalls eine Haut auf, wobei die Öffnungen der Haut bzw. die Poren der feinporigeren Seite der Membran so bemessen sind, daß die stoffspezifisch wirkenden Gruppen bzw. die genannten Trägersubstanzen oder Partikel nicht hindurchtreten können. Hierbei wird das Einschwemmen sowie die nachfolgende stoffspezifische Fluidbehandlung so durchgeführt, daß die Stoffströme von der offenporigeren Seite der Membran in die Membran eintreten und dadurch die stoffspezifisch wirkende Gruppen tragenden Substanzen oder Partikel durch die weniger offenporige Seite zurückgehalten werden.

In den Fällen, in denen in den Membranen stoffspezifisch wirkende Gruppen immobilisiert sind, ist die Porengröße der verwendeten Membran so zu wählen, daß auch trotz der in den Poren immobilisierten stoffspezifisch wirkenden Gruppen die Zielsubstanzen konvektiv von dem zu behandelnden Fluid durch die Membran transportiert werden kann.

Hinsichtlich des Materials, aus dem die Membran gemäß der Erfindung aufgebaut ist, sind keinerlei Einschränkungen gegeben. So können Membranen aus anorganischen Materialien wie Glas, Keramik, SiO₂, Kohlenstoff oder Metall, aus organischen Polymeren oder Mischungen daraus eingesetzt werden. Die Polymeren können hydrophilen und/oder hydrophoben Charakter aufweisen, sie können ausgewählt sein aus der Gruppe der cellulosischen Polymeren, wie z.B. Cellulose oder regenerierte Cellulose, modifizierte Cellulose, wie z.B. Celluloseester, Celluloseäther, aminmodifizierte Cellulosen, sowie Mischungen von cellulosischen Polymeren, aus der Gruppe der synthetischen Polymeren wie z.B. Polyacrylnitril und entsprechenden Copolymere, Polyurethan enthaltende Polymere, Polyarylsulfone und Polyarylethersulfone, wie z.B. Polysulfon oder Polyethersulfon, Polyvinylidenfluorid, Polytetrafluorethylen, wasserunlösliche Polyvinylalkohole, aliphatische und aromatische Polyamide, Polyimide, Polyetherimide, Polyester, Polycarbonate, Polyolefine, wie Polyethylen, Polypropylen, Polyvinylchlorid, Polyphenylenoxid, Polybenzimidazole und Polybenzimidazolone, sowie daraus gewonnehen Modifikationen, Blends, Mischungen oder Copolymeren dieser Polymeren. Diesen Polymeren bzw. Polymergemischen können weitere Polymere wie z.B. Polyethylenoxid, Polyhydroxyether, Polyethylenglykol, Polyvinylpyrrolidon, Polyvinylalkohol oder Polycaprolacton, oder anorganische Stoffe wie z.B. SiO₂ als Zusatzstoffe beigemischt werden. Im Einzelfall kann die Membran auch z.B. einer Oberflächenmodifikation unterzogen worden sein, um bestimmte Eigenschaften der Membranoberfläche z.B. in Form bestimmter funktioneller Gruppen einzustellen.

Besonders gute Erfahrungen wurden mit Membranen aus lösemittelstabilen und pH-Wert-stabilen Polymeren gemacht, insbesondere mit Membranen aus Polytetrafluorethylen oder Polyvinylidenfluorid sowie daraus gewonnenen Modifikationen, Blends, Mischungen oder Copolymeren. Derartige Membranen werden beispielsweise in der DE-A-39 23 128 beschrieben. Auch Cellulosen und Polyamide sowie daraus gewonnene Modifikationen, Blends, Mischungen oder Copolymere haben sich besonders bewährt, da sie hinreichend laugestabil sind und in einfacher Weise Liganden kovalent an sie gebunden werden können.

Zur Reinigung/Trennung von Ligaten aus einer ligathaltigen Flüssigkeit mittels Affinitätstrennung oder Affinitätschromatographie sind zahlreiche Anwendungen bekannt. Unter Affinitätschromatographie werden hier biospezifische Adsorptionen und auch Trennverfahren wie z.B. die Ionenaustauscherchromatographie, die Metallchelatchromatographie, die hydrophobe Chromatographie, Kovalentchromatographie oder auch die direkte Sorption von Molekülen auf ein spezifisches Adsorbermaterial verstanden.

Interessante Anwendungen beziehen sich auf die Reinigung von monoklonalen oder polyklonalen Antikörpern, auf die Entfernung von Proteasen zur Stabilisierung von biologischen Flüssigkeiten, auf die Gewinnung oder therapeutische Entfernung von Blutplasmabestandteilen aus Blutplasma, auf die Entfernung von Pyrogenen aus biologischen oder pharmazeutischen Flüssigkeiten, auf die Trennung von Enantiomeren oder auf die Isolierung von Enzymen, um nur einige Beispiele zu nennen.

Liganden können in dem hier gebrauchten Sinne je nach Anwendung nicht-spezifisch, gruppenspezifisch oder spezifisch wirken (s. E. Klein, "Affinity Membranes", John Wiley & Sons, Inc., 1991). Derartige Liganden sind beispielsweise monoklonale Antikörper, polyklonale Antikörper, Peptide, antigene Substanzen, Glycoproteine, Protein A, Protein G, Enzyme, Rezeptorproteine, Wachstumsfaktoren für Zellen, Hormone, Regulationsproteine, Inhibitoren, Kofaktoren, Heparin, Protamin, Poly-L-Lysine, Biotin, Avitin, Aminosäuren wie Trytophan, Phenylamine, L-Histidine oder Antibiotika. Desweiteren können die Liganden auch Salze wie z.B. Fe₄(Fe(CN)₆]₃ oder Farbstoffe sein. Sie können aber auch hydrophile Gruppen oder ionische Gruppen in der Oberfläche des Membranmaterials selbst sein oder an die Oberfläche gebundene Polymere sein. Beispielhaft, jedoch ohne hierauf einzuschränken, sei auch auf die in der WO 90/04609, WO 90/05018 und EP-A-0 565 978 oder auf die in E. Klein, "Affinity Membranes", John Wiley & Sons, Inc., 1991, genannten Beispiele verwiesen.

Ohne an dieser Stelle die Möglichkeiten erschöpfend aufzuzählen, können die Liganden z.B. durch Oberflächenmodifikation der Membran erzeugt werden, sie können direkt oder über Abstandsmoleküle (Spacer) an die Oberfläche gebunden werden, sie können aber auch über Tentakelsysteme oder Ketten an die Oberfläche gebunden werden, wobei an jede Kette bzw. an jedes Tentakelsystem mehrere Liganden gebunden sein können.

Um die Kapazität insbesondere von Ionenaustauschermembranen zu erhöhen, sind verschiedene an sich bekannte Methoden anwendbar, wobei die Anzahl der stoffspezifisch wirkenden Gruppen, d.h. der Liganden auf der Oberfläche der Membranen erhöht wird. Bevorzugt sind die Liganden über Moleküle langkettiger Linearpolymerer an die Membran gekoppelt, wobei die Moleküle der langkettigen Linearpolymeren eine Mehrzahl von Liganden tragen. Die Verwendung langkettiger Linearpolymerer mit Seitenarmen, sogenannter Tentakeln, wobei die Liganden an den Seitenarmen sitzen, beschreibt z.B. W. Müller, J. Chromatogr., Bd. 510 (1990), S. 133. Die Herstellung solcher Tentakel ist beispielsweise bei Tsuneda u.a. (Biotechnol. Prog., Bd. 10 (1994), S. 76-81, und J. Chromatogr. Bd. A 689 (1995), S. 211-218) beschrieben und kann über eine strahleninduzierte Pfropfpolymerisation von einem eine Epoxidgruppe enthaltenden Monomer, wie z.B. Glycidylmethacrylat, mit anschließender chemischer Umsetzung in SO₃H-Gruppen oder Diethylamino-Gruppen erfolgen. Ein anderes Verfahren zur Pfropfung von stickstoffhaltigen polymeren Flachmembranen, das zur Erhöhung der Ionenaustauscherkapazität der erfindungsgemäßen Membran-Behandlungselemente eingesetzt werden kann, wird in der EP-A-0 490 940 beschrieben.

Membranen, die mit polymerisierbaren Doppelbindungen derivatisierte Polyamide gemäß der DE-OS-195 01 726 enthalten, sind für die erfindungsgemäße Vorrichtung bzw. zur Durchführung des erfindungsgemäßen Verfahrens bestens geeignet. Diese derivatisierten Polyamide sind erhältlich durch Umsetzung des Polyamids in einer wäßrigen Lösung mit einer Verbindung, die sowohl eine polymerisierbare Doppelbindung als auch einen Oxiranring enthält, und können zu Blockpolymerisaten mit verbesserten Eigenschaften umgesetzt werden.

Für Anwendungen im Bereich der enzymatischen oder allgemein katalytischen Behandlung von Flüssigkeiten können Membranen ausgewählt werden, auf und/oder in denen nach an sich bekannten Methoden Enzyme oder Katalysatoren immobilisiert sind.

Anwendungen im Bereich der enzymatischen Flüssigkeitsbehandlung sind z.B. die enzymatische Veresterung von Ethylglycosid, die enzymatische Hydrolyse von Stärke über Amyloglucosidase, die enzymatische Hydrolyse von Enantiomeren, pflanzlichen Ölen, tierischen Ölen, wie z.B. Fischöl, oder Triglyceriden über Lipasen, der enzymatische Abbau von Proteinen über Proteinasen, der Lactoseabbau in der Milch über Lactase oder der Abbau von Blutbestandteilen über entsprechende Enzyme wie beispielsweise Harnstoff über Urease. Auch Anwendungen, wie sie in der US-A-4 061 141 beschrieben werden, fallen hierunter. Andere Enzyme sowie deren Anwendung und Möglichkeiten der Immobilisierung sind in Ullmanns Encyklopädie der technischen Chemie, 4. Auflage, Bd. 10, S. 475-561, Verlag Chemie, Weinheim 1975, beschrieben. Angaben zu Katalysatoren sowie zu deren Immobilisierung in Membranstrukturen, wie sie auch im Rahmen der vorliegenden Erfindung eingesetzt werden können, sind beispielsweise in der US-A-4 266 026 zu finden.

Im Rahmen der Erfindung können die Hohlräume insbesondere von Behandlungselementen aus Flachmembranen auch teilweise oder vollständig mit Funktionsträgern angefüllt sein, ohne daß jedoch die eigentliche Sammel- bzw. Verteilerfunktion für den Fluidstrom verlorengeht. Derartige Funktionsträger können im einfachen Fall, wie bereits beschrieben, z.B. in Form eines fluiddurchlässigen Vlieses vorliegen und allein die Funktion eines Abstandhalters haben. Es können aber auch solche Vliese eingesetzt werden, in die zusätzlich Partikel eingebracht sind, die wiederum stoffspezifische Gruppen etwa in Form von Liganden oder Enzymen tragen. Andere Beispiele sind Aktivkohle enthaltende Gewebe oder Vliese oder auch Aktivkohle allein.

Die Erfindung wird nachfolgend anhand der Zeichnungen näher erläutert. Es zeigen in vereinfachter schematischer Darstellungsweise:
- Fig. 1:: Behandlungselementepaar aus Hohlfasermembranen
- Fig. 2:: Segment aus einer Anordnung mit hohem Füllgrad von Behandlungselementen aus Hohlfasermembranen mit sechsekkiger Kontur
- Fig. 3:: Stapel von ersten und zweiten Behandlungselementen aus Membranhohlfaserketten
- Fig. 4:: Ebenes Behandlungselementepaar aus U-förmig gefalteten Flachmembranen
- Fig. 5:: Gruppe von ersten und zweiten Behandlungselementen zur stoffspezifischen Behandlung von Suspensionen
- Fig. 6:: Stufen von gegeneinander um 90° gedrehten Stapeln aus ebenen Flachmembran-Behandlungselementen
- Fig. 7:: Behandlungselementepaar aus U-förmig gefalteten Flachmembranen, welches spiralförmig um einen Kern gewickelt ist
- Fig. 8:: Paarweise Anordnung von aus Flachmembranen ausgebildeten Behandlungselementeeinheiten mit mehreren hintereinanderllegenden Behandlungselementepaaren
- Fig. 9:: Querschnitt durch eine erfindungsgemäße Vorrichtung

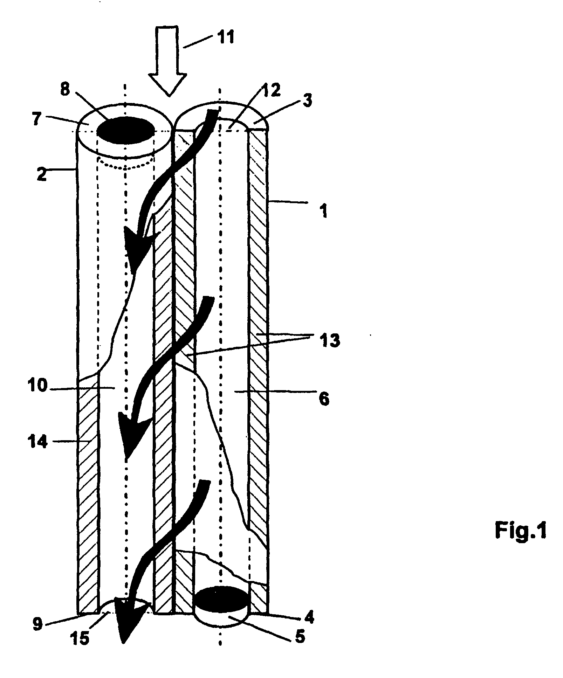

Figur 1 zeigt ein Behandlungselementepaar aus entsprechend bemessenen Stücken von Hohlfasermembranen, bestehend aus einem ersten Behandlungselement 1 und einem zweiten Behandlungselement 2. Die beiden Behandlungselemente liegen direkt aneinander, um so in einer Stufe aus solchen Behandlungselementen einen hohen Füllgrad ε einzustellen. Das das erste Behandlungselement 1 ausbildende Hohlfasermembranstück ist an seinem der Einlaßeinrichtung zugewandten Ende geöffnet, welches das geöffnete, der Einlaßeinrichtung-zugewandte Ende des Behandlungselements 1 darstellt. An seinem der Auslaßeinrichtung zugewandte Ende ist das Hohlfasermembranstück mit einem Stopfen beispielsweise aus einem Kleber verschlossen und bildet so das geschlossene, der Auslaßeinrichtung zugewandte Ende des Behandlungselements 1 aus. Somit entsteht durch das Lumen der Hohlfasermembran ein in Richtung zur Einlaßeinrichtung geöffneter Hohlraum 6. Das das zweite Behandlungselement 2 ausbildende Hohlfasermembranstück ist an seinem der Einlaßeinrichtung zugewandten Ende 7 mittels eines Stopfens 8 verschlossen und an seinem der Auslaßeinrichtung zugewandten Ende 9 geöffnet, so daß ein in Richtung der Auslaßeinrichtung geöffneter Hohlraum 10 ausgebildet wird. Die Anströmrichtung des Behandlungselementepaares ist durch den Pfeil 11 dargestellt, das zu behandelnde Fluid strömt aus Richtung der Einlaßeinrichtung auf die Behandlungselemente zu. Das Verschließen des einen Endes der Hohlfasermembranstücke kann auch durch Abschweißen anstatt durch einen Stopfen erfolgen.

Das zu behandelnde Fluid strömt aus dem an die Behandlungselemente angrenzenenden Verteilerraum durch die Hohlraumöffnung 12 in den Hohlraum 6 des ersten Behandlungselements 1 ein, durchströmt die poröse Membranwand 13 des ersten Behandlungselements 1 und tritt anschließend über die poröse Membranwand 14 des zweiten Behandlungselements 2 in den Hohlraum 10 des zweiten Behandlungselements 2 ein. Beim Einströmen in die Membranwände 13,14 und/oder beim Durchströmen derselben erfolgen die stoffspezifischen Behandlungen des Fluids. Über die Hohlraumöffnung 15 des zweiten Behandlungselements 2 verläßt das stoffspezifisch behandelte Fluid das zweite Behandlungselement in Richtung der Auslaßeinichtung und tritt in den an die Behandlungselemente angrenzenden Sammelraum ein.

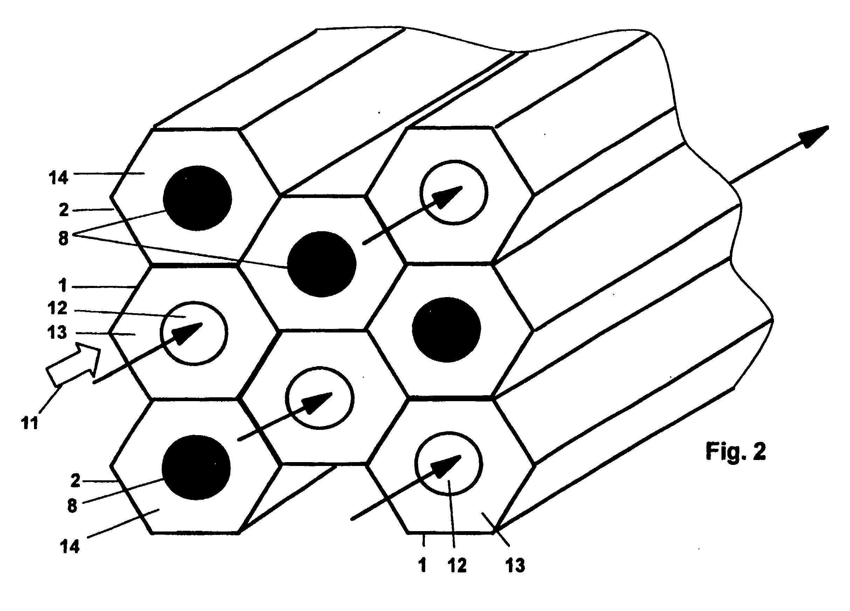

In Figur 2 ist ein Segment aus einer Anordnung von Behandlungselementen aus Hohlfasermembranen dargestellt. Die Hohlfasermembranen besitzen eine sechseckige Kontur und sind so nebeneinander angeordnet, daß eine dichte Packung mit einem Füllgrad von annähernd 1 entsteht. Eine solche Anordnung von Behandlungselementen aus Hohlfasermembranen läßt sich beispielsweise in erster Näherung so herstellen, daß Hohlfasermembranen mit runder Kontur in dichtester Packung nebeneinander als Gruppe in einem Gehäuse angeordnet werden und anschließend über einen Quellvorgang eine Ausdehnung der Hohlfasermembranen erfolgt, wobei die anfänglich noch bestehenden Zwickelbereiche zwischen den Hohlfasermembranen weitgehend ausgefüllt werden.

Bei einer derartigen Anordnung werden entsprechend in der Länge bemessene Hohlfasermembranstücke, deren eines Ende verschlossen wurde, so miteinander kombiniert, daß bei Betrachtung der Stirnflächen der entstandenen Gruppe von Behandlungselementen, wie dargestellt, Elemente mit geschlossenem Ende und Elemente mit offenem Ende benachbart sind. Bei Anströmung einer solchen Gruppe von Behandlungselementen durch das zu behandelnde Fluid von der Stirnfläche her, wobei die Anströmrichtung wiederum durch den Pfeil 11 dargestellt ist, werden die Hohlfasermembranelemente, deren Hohlraum zur Anströmseite hin eine Öffnung 12 aufweist und der zur Abströmseite hin geschlossen ist, zu ersten Behandlungselementen 1 und diejenigen, deren Hohlraum zur Anströmseite einen Verschluß 8 aufweist und der zur Abströmseite hin geöffnet ist, zu zweiten Behandlungselementen 2.

Solche Anordnungen lassen sich beispielsweise auf einfache Weise aus Matten von parallel nebeneinanderliegenden Hohlfasermembranen herstellen, deren eines Ende verschlossen ist. Entsprechend bemessene Stücke solcher Matten werden dann so in Lagen übereinander gestapelt, daß die geschlossenen Enden der Hohlfasern benachbarter Lagen auf gegenüberliegenden Seiten des Stapels liegen.

Das zu behandelnde Fluid tritt auch hier durch die Öffnungen 12 der Hohlräume der ersten Behandlungselemente 1 in diese ein, durchströmt die porösen Wände 13,14 der ersten und der benachbarten zweiten Behandlungelemente 1,2 , wobei die stoffspezifische Behandlung des Fluids erfolgt, und sammelt sich in den Hohlräumen der zweiten Behandlungselemente 2, aus denen es über deren Öffnungen an der Abströmseite und damit in Richtung der Auslaßeinrichtung herausströmt.

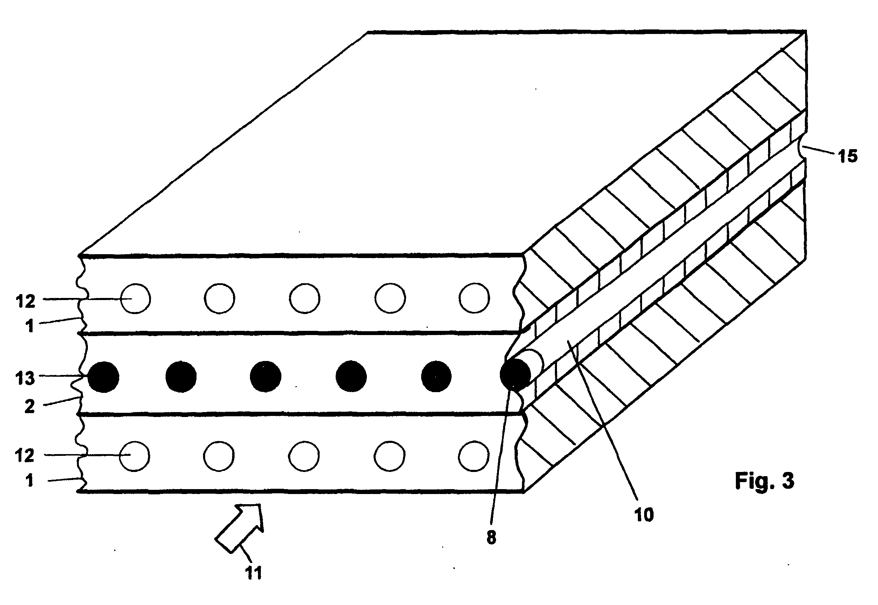

Figur 3 zeigt ein Beispiel der Ausbildung einer Gruppe von Behandlungselementen aus Membranhohlfaserketten. Derartige Membranhohlfaserketten lassen sich aus einer entsprechend ausgestalteten Düse erspinnen und besitzen mehrere durchgehende, zueinander parallele und sich längs der Hohlfaserachse erstrekkende Hohlräume. In Figur 3 sind Segmente aus Membranhohlfaserketten mit rechteckiger Außenkontur dargestellt.

Aus derartigen Membranhohlfaserketten lassen sich auf einfache Weise Gruppen von ersten und zweiten Behandlungselementen ausbilden, indem entsprechend in ihrer Länge bemessene Stücke solcher Hohlfaserketten, deren eines Ende z.B. durch Verkleben oder Verschweißen verschlossen worden ist, so aufeinandergestapelt werden, so daß die geschlossenen Enden benachbarter Hohlfaserketten im Stapel alternierend auf gegenüberliegenden Seiten des Stapels zu liegen kommen.

In der Figur 3 sind zwei Membranhohlfaserketten als erste Behandlungselemente 1 dargestellt, deren Hohlräume in Richtung der Anströmung 11 durch das zu behandelnde Fluid eine Öffnung 12 aufweisen. Zwischen diesen ersten Behandlungselementen 1 befindet sich eine Membranhohlfaserkette als zweites Behandlungselement 2, dessen Hohlräume 10 an dem Ende, an dem die Anströmung 11 durch das zu behandelnde Fluid erfolgt, durch Stopfen 8 verschlossen sind und an ihrem entgegengesetzten Ende eine Öffnung 15 aufweisen.

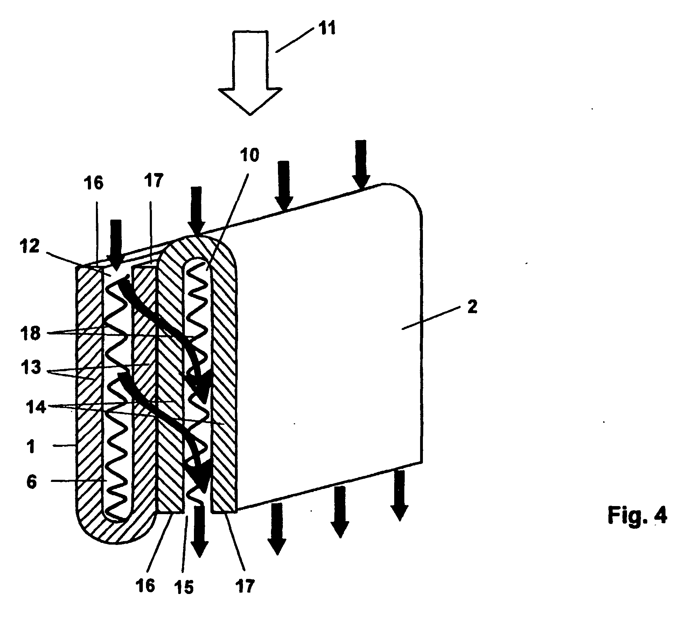

Figur 4 zeigt ein ebenes Behandlungselementepaar aus Flachmembranen mit einem ersten Behandlungselement 1 und einem zweiten Behandlungselement 2. Derartige Behandlungselemente lassen sich z.B. durch U-förmiges Falten von quadratischen oder rechteckigen Stücken von Flachmembranen herstellen. Die Schenkel 16 und 17 der gefalteten Flachmembranen werden durch Abstandshalter 18 z.B. in Form eines flüssigkeitsdurchlässigen Vlieses gegeneinander auf Abstand gehalten. Die Hohlräume 6,10 der Behandlungselemente werden durch die Schenkel 16,17 der Flachmembranelemente, die Faltkanten sowie die - hier nicht dargestellten - miteinander verbundenen Seitenkanten begrenzt und weisen an der den Faltkanten gegenüberliegenden Seite Öffnungen 12,15 auf. In der Darstellung der Figur 4 sind die beiden Flachmembranelemente so nebeneinander angeordnet, daß sich ihre benachbarten Schenkel an ihren Außenseiten berühren. Auf diese Weise lassen sich hohe Füllgrade ε realisieren und Leckströme, die in gegebenenfalls vorhandenen Zwischenräumen zwischen den Behandlungselementen auftreten würden, minimieren.

Im Anwendungsfall strömt der durch den Pfeil 11 dargestellte Strom des zu behandelnden Fluids aus dem an die Behandlungselemente angrenzenden Verteilerraum durch die Öffnung 12 des ersten Behandlungselements 1 in dessen Hohlraum 6 ein, durchströmt die poröse Membranwand 13 des ersten Behandlungselements 1 und tritt anschließend über die poröse Membranwand 14 des zweiten Behandlungselements 2 in dessen Hohlraum 10 ein. Je nach Anwendung erfolgt beim Einströmen in die Membranwände 13,14 und/oder beim Durchströmen derselben die stoffspezifische Behandlung des Fluids. Über die Hohlraumöffnung 15 verläßt das stoffspezifisch behandelte Fluid das zweite Behandlungselement und tritt in den angrenzenden Sammelraum ein.

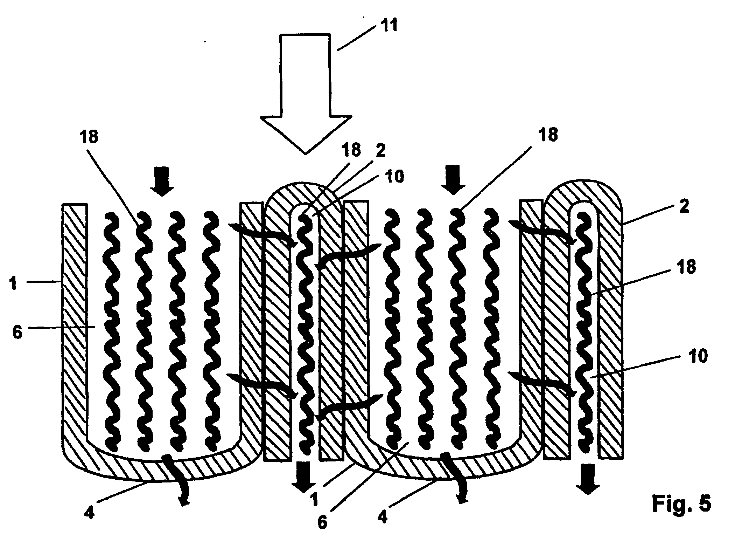

In der Figur 5 ist eine Anordnung von Behandlungselementen dargestellt, wie sie für die stoffspezifische Behandlung beispielsweise von Suspensionen einsetzbar ist. Aus U-förmig gefalteten bzw. gebogenen Flachmembranstücken gefertigte, flache Behandlungselemente sind zu einer Gruppe aus ersten und zweiten Behandlungselementen nebeneinander angeordnet. Die Hohlräume 6 der ersten Behandlungselemente 1 sind bei diesem Beispiel gemäß Figur 5 größer ausgeführt als die Hohlräume 10 der zweiten Behandlungselemente 2, wobei die Hohlräume über Abstandshalter 18 mit entsprechender Breite stabilisiert werden. Eine solche Vergrößerung der Hohlräume 6 der ersten Behandlungselemente 1 ist dann zweckmäßig, wenn z.B. bei der stoffspezifischen Behandlung von Suspensionen die suspendierten Partikel als Zielsubstanz zunächst in den ersten Behandlungselementen abfiltriert werden sollen, bevor das Filtrat, welches weitere Zielsubstanzen enthält, weiteren stoffspezifischen Behandlungen in den Membranwänden der ersten und/oder der zweiten Behandlungselemente unterzogen wird. Dabei sammeln sich natürlich während des Verlaufs der stoffspezifischen Behandlung des Fluids die zurückgehaltenen Partikel in den Hohlräumen 6 der ersten Behandlungselemente an, woraus sich die Notwendigkeit einer bestimmten Kapazität dieser Hohlräume und damit einer bestimmten Größe ergibt.

Im übrigen entsprechen die Stoffströme durch diese Anordnung denjenigen, die bereits für das Behandlungselement in Figur 4 beschrieben wurden. Jedoch ist für die in Figur 5 gezeigte Ausführung aufgrund der größeren Querschnitte der Hohlräume 6 mit einem erhöhten Stoffstrom zu rechnen, der die ersten Behandlungselemente 1 an deren geschlossenem Ende 4 verläßt. Dieser Stoffstrom kann dann erst in einer gegebenenfalls nachfolgenden Stufe von Behandlungselementen weiteren stoffspezifischen Behandlungen unterzogen werden.

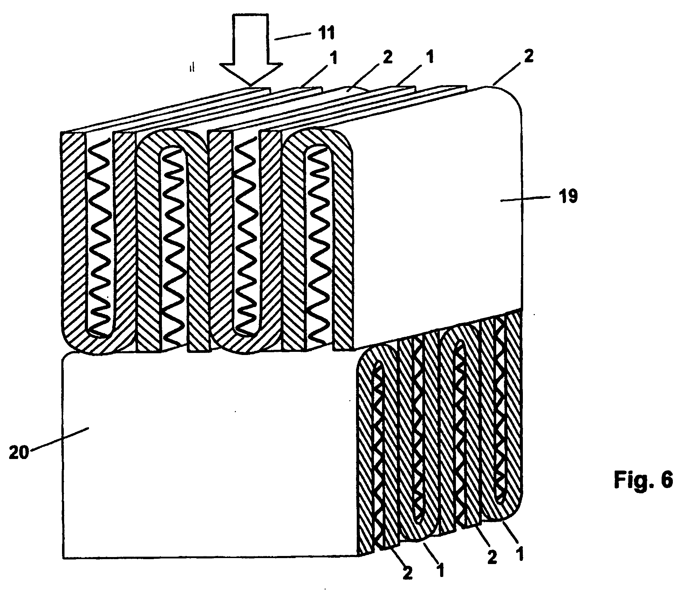

Figur 6 zeigt zwei aufeinanderfolgende Stufen 19,20 von Gruppen aus stapelförmig paarweise nebeneinander angeordneten ersten und zweiten ebenen Behandlungselementen 1,2 aus U-förmig gefalteten Flachmembranen. Die Behandlungselemente sind so nebeneinandergestapelt, daß die Zwischenräume zwischen den Behandlungselementen und somit gegebenenfalls vorhandene Leckströme minimiert sind. In dem in dieser Figur dargestellten Beispiel sind die Faltkanten der Behandlungselemente der benachbarten Stufen 19,20 gegeneinander um 90° gedreht. Auf diese Weise wird ein Abdecken der Öffnungen der ersten Behandlungselemente der jeweils nachfolgenden Stufe weitgehend vermieden und eine bessere Strömungsverteilung zwischen den Stufen erreicht.

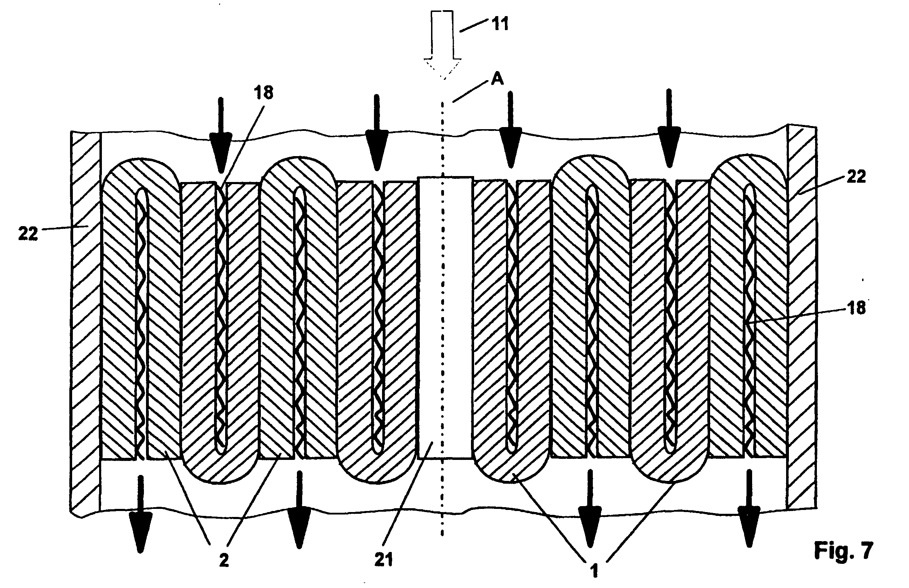

Mit ebenen Behandlungselementen aus Flachmembranen, wie sie in Figur 4 dargestellt sind, lassen sich außer durch Nebeneinanderstapeln auch durch spiralförmiges Wickeln entsprechend bemessener, z.B. U-förmig gefalteter Flachmembranstücke Gruppen von ersten und zweiten Behandlungselementen herstellen. Figur 7 zeigt einen Schnitt durch eine solche Gruppe aus je einem ersten und einem zweiten spiralförmig um einen Kern 21 gewickelten Behandlungselement 1,2, die zwischen Gehäusewände 22 eingebracht ist. Zur Herstellung einer solchen Gruppe werden beispielsweise zwei U-förmig gefaltete, in ihrer Abmessung entlang der Faltkante genügend lange Flachmembranstücke so aufeinandergelegt, daß die Faltkanten auf gegenüberliegenden Seiten liegen. Dieses Behandlungselementepaar wird dann spiralförmig um einen Wickelkern 21 gewickelt, wodurch mehrere Lagen von Behandlungselementen entstehen und im dargestellten Schnitt von innen nach außen eine alternierende Abfolge in Bezug auf die Öffnungsrichtung der Hohlräume der Behandlungselemente resultiert.

Diese spiralförmige Gruppe von ersten und zweiten Behandlungselementen wird gemäß Figur 7 so in ein Gehäuse mit zweckmäßigerweise rundem Querschnitt eingebracht, daß Wickelkernachse A und Gehäuseachse übereinstimmen oder zumindest im wesentlichen parallel zueinander sind. Hierzu ist es von Vorteil, wenn vor Einbringen der spiralförmigen Gruppe von Behandlungselementen in das Gehäuse die Spirale in ihrem Umfang etwas komprimiert wird, was beispielsweise durch eine elastische Verformung der die Hohlräume stabilisierenden Abstandshalter 18 ohne Probleme möglich ist. Nach Einbringen in das Gehäuse verbleibt die spiralförmige Gruppe von Behandlungselementen unter einer gewissen Restspannung zwischen Wickelkern 21 und Gehäusewand 22, wodurch zum einen für einen Anpreßdruck zwischen den sich berührenden Schenkeln der Behandlungselemente und damit für eine Minimierung von Zwischenräumen zwischen den Behandlungselementen gesorgt wird, zum anderen aber für eine stabile Positionierung der Behandlungselemente im Gehäuse. Durch die Anordnung der Gruppe im Gehäuse erfolgt bei gegebener Anströmrichtung 11 automatisch eine Zuordnung als erste Behandlungselemente 1 und zweite Behandlungselemente 2.

Mittels derartiger spiralförmig gewickelter Behandlungselemente lassen sich auf einfache Weise bei Verwendung von Wickelkernen hohe Füllgrade ε realisieren, wobei gleichzeitig Leckströme zwischen den Behandlungselementen weitestgehend vermieden werden können.

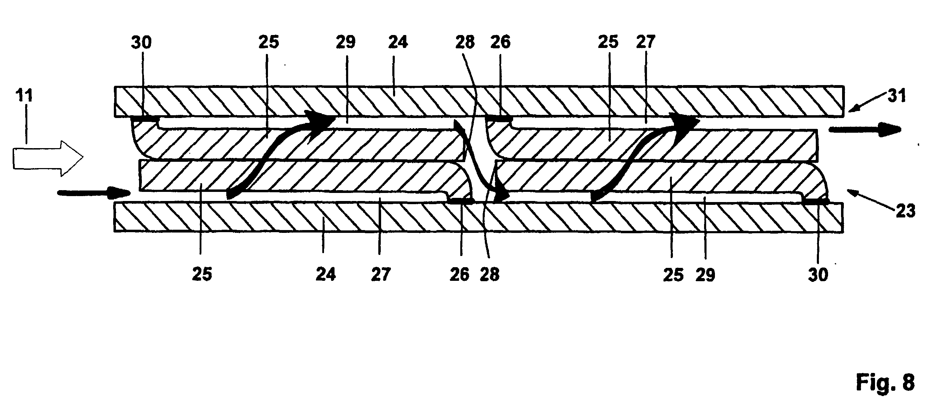

Figur 8 zeigt eine ebenfalls auf Basis von Flachmembranen herstellbare Ausführungsform von Behandlungselementen. Hierbei sind mehrere hintereinanderliegende Behandlungselemente zu Behandlungselementeeinheiten zusammengefaßt, wobei in Figur 8 eine Kombination zweier solcher Behandlungselementeeinheiten mit je zwei hintereinanderliegenden Behandlungselementen dargestellt ist. Hierbei sind gleichzeitig fluidundurchlässige Folien mit Flachmembranen kombiniert.

Zur Herstellung einer solchen Behandlungselementeeinheit 23 werden vorzugsweise nahezu gleich große quadratische oder rechteckige Stücke einer fluidundurchlässigen Folie 24 und einer Flachmembran 25 übereinandergelegt, wobei zwischen Folie und Membran zusätzlich zur späteren Stabilisierung der Hohlräume der Behandlungselemente ein - in der Figur 8 jedoch nicht dargestellter - Abstandshalter z.B. in Form eines Vlieses eingelegt ist. Die Flachmembran 25 und gegebenenfalls der Abstandshalter werden zur Herstellung der Behandlungselementeeinheit 23 mit zwei hintereinanderliegenen Behandlungselementen, wie in Figur 8 dargestellt, entlang einer Linie parallel zu den im späteren eingebauten Zustand der Einheit quer zur Strömungsrichtung liegenden Kanten der Folien- bzw. Membranstücke durchgeschnitten. Anschließend wird die eine Schnittkante 26 der Flachmembran 25 mit der Folie 24 formschlüssig verbunden, z.B. durch Verschweißen oder Verkleben. Hierdurch entsteht ein Behandlungselement 27 mit einem einseitig geöffneten Hohlraum. Die zweite Schnittkante 28 bildet zusammen mit der Folie 24 die Öffnung des Hohlraums des angrenzenden Behandlungselements 29, der an seinem anderen Ende durch formschlüssiges Verbinden der freien Membrankante 30 mit der Folie 24 geschlossen wird.

Eine solche Behandlungselementeeinheit 23 wird mit einer in ihrer Ausführung mit der ersten Einheit identischen, gegenüber dieser jedoch gedrehten zweiten Behandlungselementeeinheit 31 so kombiniert, daß, bezogen auf die Anströmrichtung 11 eines zu behandelnden Fluids, hintereinanderliegende Paare von ersten und zweiten Behandlungselementen entstehen. Auf diese Weise sind in einer solchen Kombination von Behandlungselementeeinheiten gemäß Figur 8 zwei Stufen von Behandlungselementen realisiert, die von dem zu behandelnden Fluid mäanderförmig durchströmt werden.

Aus so kombinierten Paaren von Behandlungselementeeinheiten, die auch mehr als zwei hintereinander angeordnete Paare von Behandlungselementen enthalten können, lassen sich größere Behandlungseinheiten herstellen, indem mehrere dieser Paare von Behandlungselementeeinheiten nebeneinander zu Stapeln geschichtet werden oder indem mindestens ein solches Paar spiralförmig um eine Achse oder einen Kern quer zu den bei der Ausbildung der Behandlungselemente entstandenen Schnittkanten gewickelt wird.

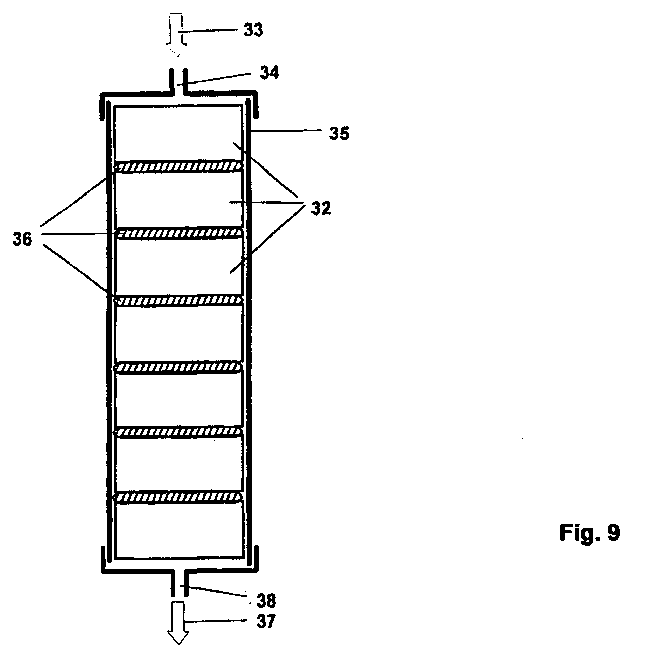

In Figur 9 ist eine mehrere Stufen 32 von ersten und zweiten Behandlungselementen enthaltende erfindungsgemäße Vorrichtung schematisch im Querschnitt dargestellt. Das zu behandelnde Fluid 33 tritt als Feedstrom durch die Einlaßeinichtung 34 in das Gehäuse 35 der erfindungsgemäßen Vorrichtung ein und wird, gegebenenfalls unterstützt durch eine entsprechend ausgelegte - hier nicht dargestellte - Verteilereinrichtung, auf die Behandlungselemente der ersten Stufe gleichmäßig verteilt. Das Fluid durchläuft dann nacheinander die im Gehäuse enthaltenen Stufen 32 von Behandlungselementen, in denen die stoffspezifische Behandlung bzw. die stoffspezifischen Behandlungen des Fluids erfolgen. Entsprechend Figur 9 sind benachbarte Stufen 32 in der erfindungsgemäßen Vorrichtung zueinander beabstandet. Die resultierenden Zwischenräume zwischen den einzelnen Stufen, die Sammelraum für die davorliegende Stufe und gleichzeitig Verteilerraum für die nachfolgende Stufe sind, sind mit Abstandshaltern 36 in Form beispielsweise fluiddurchlässiger Vliese ausgefüllt, wodurch eine bessere Durchmischung des eine Stufe verlassenden Fluidstroms und gleichzeitig eine Erhöhung der Stabilität der Positionierung der einzelnen Stufen von Behandlungselementen im Gehäuse erreicht werden kann. Nach Durchlaufen der erforderlichen Anzahl von Stufen 32 wird das behandelte Fluid 37 über die Auslaßeinrichtung 38 aus dem Gehäuse abgeleitet.

## Patentansprüche

1. Vorrichtung zur stoffspezifischen Behandlung eines Fluids (33), enthaltend
a) ein Gehäuse (35),
b) eine Einlaßeinrichtung (34) zum Einleiten des zu behandelnden Fluids (33) in das Gehäuse (35) in einen Verteilerraum,
c) eine Auslaßeinrichtung (38) zum Ableiten des behandelten Fluids (37) aus dem Gehäuse (35) aus einem Sammelraum,
d) mindestens ein erstes Behandlungselement (1) und mindestens ein zweites Behandlungselement (2) zur stoffspezifischen Behandlung des Fluids, wobei jedes Behandlungselement ein der Einlaßeinrichtung (34) zugewandtes Ende (3,7) und ein der Auslaßeinrichtung (38) zugewandtes Ende (4,9) aufweist,
wobei das mindestens eine erste Behandlungselement (1) mindestens einen durch seine Wände (13) gebildeten, in Richtung der Einlaßeinrichtung (34) geöffneten und in Richtung der Auslaßeinrichtung (38) geschlossenen Hohlraum (6) aufweist und das mindestens eine zweite Behandlungselement (2) mindestens einen durch seine Wände (14) gebildeten, in Richtung der Auslaßeinrichtung (38) geöffneten und in Richtung der Einlaßeinrichtung (34) geschlossenen Hohlraum (10) aufweist und wobei die Wände (13,14) der Behandlungselemente (1,2) zumindest teilweise aus mindestens einer semipermeablen Membran mit einer porösen Struktur gebildet sind, **dadurch gekennzeichnet, daß** die Behandlungselemente (1,2) zu mindestens einer Gruppe von im wesentlichen quer zur Erstreckung des Gehäuses (35) zwischen Einlaßeinrichtung (34) und Auslaßeinrichtung (38) jeweils zueinander benachbarten ersten und zweiten Behandlungselementen zusammengefaßt sind, wobei die in einer Gruppe zusammengefaßten Behandlungselemente eine Stufe (32) ausbilden und innerhalb einer Stufe (32) der Füllgrad ε des Gehäuses (35) zwischen 0,6 und 0,999 liegt, wobei der Füllgrad ε definiert ist als V_{B}/(V_{B}+V_{Z}) , mit V_{B} als der Summe der Volumina V_{b} der in der Stufe (32) enthaltenen Behandlungselemente (1,2) und V_{Z} als dem Volumen des sich zwischen den Behandlungselementen (1,2) der Stufe (32) und sich zwischen den Behandlungselementen (1,2) der Stufe (32) und der Gehäuseinnenwand ausbildenden Zwischenraums, daß die Enden der Behandlungselemente frei von einer die Enden aller Behandlungselemente einer Gruppe einschließenden Einbettung sind, daß der Verteilerraum lediglich von dem Gehäuse (35), der Einlaßeinrichtung (34) und den der Einlaßeinrichtung (34) zugewandten Enden (3,7) der der Einlaßeinrichtung (34) benachbarten Gruppe von Behandlungselementen begrenzt wird, daß der Sammelraum lediglich von dem Gehäuse (35), der Auslaßeinrichtung (38) und den der Auslaßeinrichtung (38) zugewandten Enden (4,9) der der Auslaßeinrichtung (38) benachbarten Gruppe von Behandlungselementen begrenzt wird.

2. Vorrichtung nach Anspruch 1, **dadurch gekennzeichnet, daß** die mindestens eine Gruppe Paare aus ersten und zweiten Behandlungselementen (1,2) enthält.

3. Vorrichtung nach einem oder mehreren der Ansprüche 1 oder 2, **dadurch gekennzeichnet, daß** die der Einlaßeinrichtung (34) zugewandten Enden (3,7) und die der Auslaßeinrichtung (38) zugewandten Enden (4,9) der zu einer Gruppe zusammengefaßten Behandlungselemente (1,2) jeweils im wesentlichen in einer Ebene senkrecht zur Richtung der Erstreckung des Gehäuses (35) zwischen Einlaßeinrichtung (34) und Auslaßeinrichtung (38) liegen.

4. Vorrichtung nach einem oder mehreren der Ansprüche 1 bis 3, **dadurch gekennzeichnet, daß** im Gehäuse (35) in Richtung der Erstreckung des Gehäuses (35) zwischen Einlaßeinrichtung (34) und Auslaßeinrichtung (38) mehrere Gruppen von Behandlungselementen (1,2) als Stufen (32) hintereinander angeordnet sind.

5. Vorrichtung nach Anspruch 4, **dadurch gekennzeichnet, daß** bis zu 100 Stufen (32) hintereinander angeordet sind.

6. Vorrichtung nach Anspruch 5, **dadurch gekennzeichnet, daß** bis zu 10 Stufen (32) hintereinander angeordnet sind.

7. Vorrichtung nach einem oder mehreren der Ansprüche 4 bis 6, **dadurch gekennzeichnet, daß** die Stufen (32) einen Abstand zueinander aufweisen.

8. Vorrichtung nach einem oder mehreren der Ansprüche 1 bis 7 **dadurch gekennzeichnet, daß** mindestens ein Behandlungselement ein Verhältnis V_{w}/V_{b} des Volumens seiner Wände V_{w} zu dem aus dem Volumen V_{w} seiner Wände und dem Volumen Vₕ seines mindestens einen Hohlraums zusammengesetzten Volumen V_{b} zwischen 0,4 und 0,9 aufweist, wobei sich die Größen V_{w}, Vₕ und V_{b} auf Wandvolumen, Hohlraumvolumen und Gesamtvolumen eines einzelnen Behandlungselements beziehen.

9. Vorrichtung nach Anspruch 8,**dadurch gekennzeichnet, daß** das Verhältnis V_{w}/V_{b} zwischen 0,6 und 0,8 liegt.

10. Vorrichtung nach einem oder mehreren Ansprüchen 1 bis 9
**dadurch gekennzeichnet, daß** der Füllgrad ε im Bereich zwischen 0,95 und 0,999 liegt.

11. Vorrichtung nach einem oder mehreren der Ansprüche 1 bis 10, **dadurch gekennzeichnet, daß** mindestens ein Hohlraum ein Abmessungsverhältnis L/D seiner Abmessung L in Richtung der Erstreckung des Gehäuses (35) zwischen Einlaßeinrichtung (34) und Auslaßeinrichtung (38) und des hydraulischen Durchmessers D seines Querschnitts senkrecht dazu zwischen 2 und 4000 aufweist.

12. Vorrichtung nach Anspruch 11, **dadurch gekennzeichnet, daß** das Abmessungsverhältnis zwischen 10 und 400 liegt.

13. Vorrichtung nach einem oder mehreren der Ansprüche 1 bis 12, **dadurch gekennzeichnet, daß** die Wände (13,14) eines jeden Behandlungselements (1,2) eine im wesentlichen gleichmäßige Dicke aufweisen.

14. Vorrichtung nach einem oder mehreren der Ansprüche 1 bis 13, **dadurch gekennzeichnet, daß** die mindestens eine semipermeable Membran einen mittleren Porendurchmesser zwischen 0,01 µm und 10 µm aufweist.

15. Vorrichtung nach Anspruch 14, **dadurch gekennzeichnet, daß** die mindestens eine Membran einen mittleren Porendurchmesser zwischen 0,1 µm und 3 µm aufweist.

16. Vorrichtung nach einem oder mehreren der Ansprüche 1 bis 15, **dadurch gekennzeichnet, daß** die Membran eine mittlere Porosität zwischen 50 Vol% und 90 Vol% aufweist.

17. Vorrichtung nach einem oder mehreren der Ansprüche 1 bis 16, **dadurch gekennzeichnet, daß** die Membran eine BET-Oberfläche zwischen 2 und 300 m² je cm³ Membranvolumen aufweist.

18. Vorrichtung nach Anspruch 17, **dadurch gekennzeichnet, daß** die Membran eine BET-Oberfläche zwischen 8 und 30 m² je cm³ Membranvolumen aufweist.

19. Vorrichtung nach einem oder mehreren der Ansprüche 1 bis 18, **dadurch gekennzeichnet, daß** die Membran eine Hohlfasermembran und die Wand (13,14) der Hohlfasermembran Wand des Hohlraums (6,10) ist und die Hohlfasermembran an einem Ende (4,7) geschlossen ist.

20. Vorrichtung nach Anspruch 19, **dadurch gekennzeichnet, daß** die Hohlfasermembranen einer Gruppe von nebeneinanderliegenden Behandlungselementen mittels textiler Fäden in mindestens eine Hohlfasermatte mit im wesentlichen zueinander parallelen Hohlfasermembranen eingebunden sind.

21. Vorrichtung nach Anspruch 20, **dadurch gekennzeichnet, daß** die mindestens eine Hohlfasermatte eine Webmatte ist.

22. Vorrichtung nach Anspruch 20, **dadurch gekennzeichnet, daß** die mindestens eine Hohlfasermatte eine Wirkmatte ist.

23. Vorrichtung nach Anspruch 20, **dadurch gekennzeichnet, daß** die mindestens eine Hohlfasermatte ein Webbändchen ist.

24. Vorrichtung nach einem oder mehreren der Ansprüche 20 bis 23, **dadurch gekennzeichnet, daß** die Hohlfasermembranen mit einseitig geöffneten Hohlräumen (6,10) so in der Hohlfasermatte eingebunden sind, daß die Öffnungen (12,15) der Hohlräume (6,10) benachbarter Hohlfasermembranen auf entgegengesetzten Seiten der Hohlfasermatte angeordnet sind.

25. Vorrichtung nach Anspruch 24, **dadurch gekennzeichnet, daß** mindestens eine Hohlfasermatte spiralförmig um eine zu den Hohlfasermembranen und zur Erstreckung des Gehäuses (35) zwischen Einlaßeinrichtung (34) und Auslaßeinrichtung (38) im wesentlichen parallele Wickelachse gewickelt ist.

26. Vorrichtung nach Anspruch 24, **dadurch gekennzeichnet, daß** mehrere Hohlfasermatten zu Stapeln von einzelnen Mattenlagen oder gefalteten Mattenlagen aufeinandergeschichtet sind, wobei die Hohlfasermembranen im resultierenden Stapel vorzugsweise parallel zueinander angeordnet sind.

27. Vorrichtung nach einem oder mehreren der Ansprüche 20 bis 23, **dadurch gekennzeichnet, daß** die Hohlfasermembranen mit einseitig geöffneten Hohlräumen so in der Hohlfasermatte eingebunden sind, daß die Öffnungen aller Hohlräume auf der gleichen Seite der Hohlfasermatte angeordnet sind.

28. Vorrichtung nach Anspruch 27, **dadurch gekennzeichnet, daß** mehrere Hohlfasermatten als Lagen so aufeinandergestapelt sind, daß sich die geschlossenen Enden der Hohlfasermembranen von Lage zu Lage alternierend auf gegenüberliegenden Seiten des Stapels befinden.

29. Vorrichtung nach Anspruch 27, **gekennzeichnet durch** mindestens ein Paar der Hohlfasermatten, wobei die Hohlfasermatten eines Paares so aufeinandergelegt sind, daß die Öffnungen der Hohlfasermembranen der ersten Matte und die Öffnungen der Hohlfasermembranen der zweiten Matte auf entgegengesetzten Seiten liegen, und wobei das mindestens eine Paar spiralförmig um eine zu den Hohlfasermembranen und zur Erstreckung des Gehäuses (35) zwischen Einlaßeinrichtung (34) und Auslaßeinrichtung (38) im wesentlichen parallele Wickelachse gewickelt ist.

30. Vorrichtung nach einem oder mehreren der Ansprüche 1 bis 18, **dadurch gekennzeichnet, daß** die Behandlungselemente (1,2) aus mindestens einer Flachmembran gebildet sind.

31. Vorrichtung nach Anspruch 30, **dadurch gekennzeichnet, daß** Behandlungselemente (1,2) aus U-förmig gefalteten Flachmembranen gebildet sind, wobei die Schenkel (16,17) der U-förmig gefalteten Flachmembran zur Bildung des Hohlraums (6,10) durch Abstandshalter (18) auf Abstand gehalten werden, wobei die durch die Faltung entstandene Faltkante bei ersten Behandlungselementen (1) in Richtung der Auslaßeinrichtung (38) angeordnet ist und die durch die Faltung entstandene Faltkante bei zweiten Behandlungselementen (2) in Richtung der Einlaßeinrichtung (34) angeordnet ist.

32. Vorrichtung nach Anspruch 30, **dadurch gekennzeichnet, daß** die Behandlungselemente (1,2) aus zwei gleich großen, zueinander im wesentlichen parallelen und gegeneinander durch Abstandshalter (18) beabstandeten Flachmembranen ausgebildet sind, die so zueinander angeordnet sind, daß ihre Kanten parallel zueinander verlaufen und die an einer Kante formschlüssig miteinander verbunden sind, wobei die formschlüssig verbundene Kante bei ersten Behandlungselementen (1) in Richtung der Auslaßeinrichtung (38) angeordnet ist und die durch die formschlüssig verbundene Kante bei zweiten Behandlungselementen (2) in Richtung der Einlaßeinrichtung (34) angeordnet ist.

33. Vorrichtung nach Anspruch 32, **dadurch gekennzeichnet, daß** die Behandlungselemente (1,2) aus einer Flachmembran (25) und einer fluidundurchlässigen Folie (24) ausgebildet sind.

34. Vorrichtung nach einem oder mehreren der Ansprüche 30 bis 33, **dadurch gekennzeichnet, daß** die Behandlungselemente (1,2) in ebener Form zu Stapeln mit einer alternierenden Abfolge von ersten und zweiten Behandlungselementen nebeneinander angeordnet sind.

35. Vorrichtung nach einem oder mehreren der Ansprüche 31 bis 33, **dadurch gekennzeichnet, daß** mindestens ein Paar aus einem ersten Behandlungselement (1) und einem zweiten Behandlungselement (2) spiralförmig um eine zu den durch Falten oder formschlüssiges Verbinden geschlossenen Kanten senkrechte und zur Richtung der Erstreckung des Gehäuses (35) zwischen Einlaßeinrichtung (34) und Auslaßeinrichtung (35) im wesentlichen parallele Wickelachse (A) gewickelt ist.

36. Vorrichtung nach einem oder mehreren der Ansprüche 1 bis 35, **dadurch gekennzeichnet, daß** die mindestens eine Membran aus Cellulose, Polyamid Polytetrafluorethylen oder Polyvinylidenfluorid oder daraus gewonnenen Modifikationen, Blends, Mischungen oder Copolymeren besteht.

37. Vorrichtung nach einem oder mehreren der Ansprüche 1 bis 36, **dadurch gekennzeichnet, daß** auf und/oder in der mindestens einen Membran stoffspezifisch wirkende Gruppen immobilisiert sind.

38. Vorrichtung nach Anspruch 37, **dadurch gekennzeichnet, daß** die stoffspezifisch wirkenden Gruppen Liganden zur affinen Trennung von Ligaten aus einer zu behandelnden Flüssigkeit sind.

39. Vorrichtung nach Anspruch 38, **dadurch gekennzeichnet, daß** die Liganden über Moleküle langkettiger Linearpolymerer an die Membran gekoppelt sind, wobei die Moleküle der langkettigen Linearpolymeren eine Mehrzahl von Liganden tragen.

40. Vorrichtung nach Anspruch 37, **dadurch gekennzeichnet, daß** die stoffspezifisch wirkenden Gruppen Katalysatoren sind.

41. Verfahren zur stoffspezifischen Behandlung eines Fluids (33) unter Verwendung einer Vorrichtung nach Anspruch 1, umfassend mindestens die Schritte:
a) Einleiten des zu behandelnden Fluids (33) über die Einlaßeinrichtung (34) des Gehäuses (35) in den Verteilerraum,
b) Einströmen zumindest eines Teils des zu behandelnden Fluids (33) aus dem Verteilerraum in die Hohlräume (6) der ersten Behandlungselemente (1) einer Gruppe von Behandlungselementen (1,2) und Durchströmen der Wände (13) der ersten Behandlungselemente (1), wobei eine stoffspezifische Behandlung des Fluids erfolgt,
c) Ausströmen des so stoffspezifisch behandelten Fluids aus den ersten Behandlungselementen (1) aus deren Wänden (13),
d) Einströmen zumindest eines Teils des in den ersten Behandlungselementen (1) stoffspezifisch behandelten Fluids in die Wände (14) der zweiten Behandlungselemente (2) der Gruppe und Durchströmen der Wände (14), wobei eine stoffspezifische Behandlung des die Wände (14) der zweiten Behandlungselemente (2) durchströmenden Fluids erfolgt,
e) Ausströmen des in den zweiten Behandlungselementen (2) stoffspezifisch behandelten Fluids aus den Hohlräumen (10) der zweiten Behandlungselemente (2),
f) Sammeln des behandelten Fluid im Sammelraum,
g) Ableiten des behandelten Fluids (37) über die Auslaßeinrichtung (38) des Gehäuses (35).

42. Verfahren nach Anspruch 41, **dadurch gekennzeichnet, daß** die Schritte b) bis d) mehrfach durchlaufen werden.

43. Verfahren nach Anspruch 42, **dadurch gekennzeichnet, daß** die Behandlung des Fluids in mehreren in Richtung der Durchströmung des Gehäuses (35) räumlich hintereinander als Stufen (32) angeordneten Gruppen von Behandlungselementen (1,2) durchgeführt wird.

44. Verfahren nach Anspruch 43, **dadurch gekennzeichnet, daß** bis zu 100 Stufen (32) hintereinander angeordnet sind.

45. Verfahren nach Anspruch 44, **dadurch gekennzeichnet, daß** bis zu 10 Stufen (32) hintereinander angeordnet sind.

46. Verfahren nach einem oder mehreren der Ansprüche 41 bis 45, **dadurch gekennzeichnet, daß** mehrere Gehäuse (35) mit darin angeordneten Behandlungselementen (1,2) hintereinandergeschaltet werden.

47. Verfahren nach einem oder mehreren der Ansprüche 41 bis 46, **dadurch gekennzeichnet, daß** das zu behandelnde Fluid rezirkuliert wird.

48. Verfahren zur Reinigung/Trennung von Ligaten aus einer ligathaltigen Flüssigkeit mittels Affinität, **dadurch gekennzeichnet, daß** mindestens eine Membran eingesetzt wird, auf und/oder in der Liganden für besagte Ligaten immobilisiert sind, und das Verfahren gemäß einem oder mehreren der Ansprüche 41 bis 47 durchgeführt wird.

49. Verfahren zur katalytischen Behandlung von Fluiden, **dadurch gekennzeichnet, daß** mindestens eine Membran eingesetzt wird, auf und/oder in der Katalysatoren immobilisiert sind, und das Verfahren gemäß einem oder mehreren der Ansprüche 41 bis 47 durchgeführt wird.

50. Verwendung der Vorrichtung nach einem oder mehreren der Ansprüche 38 oder 39 zur Trennung/Reinigung von Ligaten aus einer diese Ligaten enthaltenden Flüssigkeit.

51. Verwendung der Vorrichtung nach Anspruch 40 zur Durchführung von katalytischen Reaktionen an in Fluiden enthaltenen Zielsubstanzen.

## Claims

1. Apparatus for substance-specific treatment of a fluid (33), including
a) a housing (35),
b) an inlet arrangement (34) for introducing the fluid (33) to be treated into a distribution space in the housing (35),
c) an outlet arrangement (38) for removing the treated fluid (37) from a collection space in the housing (35),
d) at least one first treatment element (1) and at least one second treatment element (2) for substance-specific treatment of the fluid, whereby each treatment element has an end (3,7) pointing toward the inlet arrangement (34) and an end (4,9) pointing toward the outlet arrangement (38),
whereby the at least one first treatment element (1) has at least one cavity (6) formed by its walls (13), open toward the inlet arrangement (34) and closed toward the outlet arrangement (38), and the at least one second treatment element (2) has at least one cavity (10) formed by its walls (14), open toward the outlet arrangement (38) and closed toward the inlet arrangement (34), and whereby the walls (13,14) of the treatment elements (1,2) are at least in part formed from at least one semi-permeable membrane with a porous structure, **characterized in that** the treatment elements (1,2) are combined to form at least one group of first and second treatment elements that are adjacent to one another in each case in a direction substantially perpendicular to the extent of the housing (35) between the inlet arrangement (34) and outlet arrangement (38), whereby the treatment elements combined to form one group form a stage (32) and within a stage (32) the filling ratio ε of the housing (35) is between 0.6 and 0.999, the filling ratio ε being defined as V_{B}/(V_{B}+V_{Z}), where V_{B} is the sum of the volumes V_{b} of the individual treatment elements (1,2) in the stage (32) and V_{z} is the volume of the intermediate space formed between the treatment elements (1,2) of the stage (32) and between the treatment elements (1,2) of the stage (32) and the housing inner wall, that the ends of the treatment elements are free of any embedding which encompasses the ends of all treatment elements of a group, that the distribution space is delimited only by the housing (35), the inlet arrangement (34), and the ends (3,7), pointing toward the inlet arrangement (34), of the group of treatment elements adjacent to the inlet arrangement (34), that the collection space is delimited only by the housing (35), the outlet arrangement (38), and the ends (4,9), pointing toward the outlet arrangement (38), of the group of treatment elements adjacent to the outlet arrangement (38).

2. Apparatus according to Claim 1, **characterized in that** the at least one group contains pairs of first and second treatment elements (1,2).

3. Apparatus according to one or more of Claims 1 or 2, **characterized in that** the ends (3,7) pointing toward the inlet arrangement (34) and the ends (4,9) pointing toward the outlet arrangement (38) of treatment elements (1,2), combined to form a group, lie each substantially in a plane perpendicular to the direction taken by the housing (35) between the inlet arrangement (34) and outlet arrangement (38).

4. Apparatus according to one or more of Claims 1 to 3, **characterized in that** a plurality of groups of treatment elements (1,2) are arranged in series as stages (32) in the housing (35) in the direction taken by the housing (35) between the inlet arrangement (34) and outlet arrangement (38).

5. Apparatus according to Claim 4, **characterized in that** up to 100 stages (32) are arranged in series.

6. Apparatus according to Claim 5, **characterized in that** up to 10 stages (32) are arranged in series.

7. Apparatus according to one or more of Claims 4 to 6, **characterized in that** the stages (32) are spatially separated from one another.

8. Apparatus according to one or more of Claims 1 to 7, **characterized in that** at least one treatment element has a ratio V_{w}/V_{b} of the volume of its walls V_{w} to the volume V_{b} comprising the volume of its walls V_{w} and the volume Vₕ of its at least one cavity that is between 0.4 and 0.9, where V_{w}, Vₕ, and V_{b} refer to the wall, cavity and total volumes, respectively, of an individual treatment element.

9. Apparatus according to Claim 8, **characterized in that** the ratio V_{w}/V_{b} is between 0.6 and 0.8.

10. Apparatus according to one or more of Claims 1 to 9, **characterized in that** the filling ratio ε is in the range from 0.95 to 0.999.

11. Apparatus according to one or more of Claims 1 to 10, **characterized in that** at least one cavity has a dimensional ratio L/D of its dimension L in the direction taken by the housing (35) between the inlet arrangement (34) and outlet arrangement (38) to the hydraulic diameter D of its cross-section perpendicular thereto of between 2 and 4000.

12. Apparatus according to Claim 11, **characterized in that** the dimensional ratio is between 10 and 400.

13. Apparatus according to one or more of Claims 1 to 12, **characterized in that** the walls (13,14) of each treatment element (1,2) have an essentially uniform thickness.

14. Apparatus according to one or more of Claims 1 to 13, **characterized in that** the at least one semi-permeable membrane has a mean pore diameter between 0.01 µm and 10 µm.

15. Apparatus according to Claim 14, **characterized in that** the at least one membrane has a mean pore diameter between 0.1 µm and 3 µm.

16. Apparatus according to one or more of Claims 1 to 15, **characterized in that** the membrane has a mean porosity between 50% and 90% by volume.

17. Apparatus according to one or more of Claims 1 to 16, **characterized in that** the membrane has a BET surface area between 2 and 300 m² per cm³ of membrane volume.

18. Apparatus according to Claim 17, **characterized in that** the membrane has a BET surface area between 8 and 30 m² per cm³ of membrane volume.

19. Apparatus according to one or more of Claims 1 to 18, **characterized in that** the membrane is a hollow-fiber membrane, the wall (13,14) of the hollow-fiber membrane is the wall of the cavity (6,10), and the hollow-fiber membrane is closed at one end (4,7).

20. Apparatus according to Claim 19, **characterized in that** the hollow-fiber membranes of a group of adjacent treatment elements are bound using textile threads into at least one hollow-fiber mat, with hollow-fiber membranes essentially parallel to one another.

21. Apparatus according to Claim 20, **characterized in that** the at least one hollow-fiber mat is a woven mat.

22. Apparatus according to Claim 20, **characterized in that** the at least one hollow-fiber mat is a knitted mat.

23. Apparatus according to Claim 20, **characterized in that** the at least one hollow-fiber mat is a small woven ribbon.

24. Apparatus according to one or more of Claims 20 to 23, **characterized in that** the hollow-fiber membranes with cavities (6,10) open on one side are bound in the hollow-fiber mat such that the openings (12,15) of the cavities (6,10) of adjacent hollow-fiber membranes are arranged on opposite sides of the hollow-fiber mat.

25. Apparatus according to Claim 24, **characterized in that** at least one hollow-fiber mat is wound spirally around a winding axis essentially parallel to the hollow-fiber membranes and to the direction taken by the housing (35) between the inlet arrangement (34) and outlet arrangement (38).

26. Apparatus according to Claim 24, **characterized in that** a plurality of hollow-fiber mats are superimposed to form stacks of individual mat layers or folded mat layers, whereby the hollow-fiber membranes in the resulting stack are preferably arranged parallel to each other.

27. Apparatus according to one or more of Claims 20 to 23, **characterized in that** the hollow-fiber membranes with cavities open on one side are bound in the hollow-fiber mat such that the openings of all cavities are arranged on the same side of the hollow-fiber mat.

28. Apparatus according to Claim 27, **characterized in that** a plurality of hollow-fiber mats are superimposed as layers such that the closed ends of the hollow-fiber membranes alternate from layer to layer on opposite sides of the stack.

29. Apparatus according to Claim 27, **characterized by** at least one pair of hollow-fiber mats, where the hollow-fiber mats of one pair are superimposed such that the openings of the hollow-fiber membranes of the first mat and the openings of the hollow-fiber membranes of the second mat are on opposite sides and where the at least one pair is wound spirally around a winding axis essentially parallel to the hollow-fiber membranes and the direction taken by the housing (35) between the inlet arrangement (34) and outlet arrangement (38).

30. Apparatus according to one or more of Claims 1 to 18, **characterized in that** the treatment elements (1,2) are formed from at least one flat membrane.

31. Apparatus according to Claim 30, **characterized in that** treatment elements (1,2) are formed from flat membranes folded in a U-shape, where the flanks (16,17) of the flat membrane folded in a U-shape are held at a distance by spacers (18) for forming the cavity (6,10), whereby the edge formed by folding is arranged in the direction of the outlet arrangement (38) for first treatment elements (1) and the edge formed by folding is arranged in the direction of the inlet arrangement (34) for second treatment elements (2).

32. Apparatus according to Claim 30, **characterized in that** the treatment elements (1,2) are formed from two equally sized flat membranes, spaced from one another by spacers (18) and essentially parallel to each other, that are arranged such that their edges run parallel to each other and are positively joined at one edge, whereby the positively joined edge in the case of first treatment elements (1) is arranged toward the outlet arrangement (38) and the positively joined edge in the case of second treatment elements (2) is arranged in the direction of the inlet arrangement (34).

33. Apparatus according to Claim 32, **characterized in that** the treatment elements (1,2) are formed from a flat membrane (25) and a fluid-impermeable film (24).

34. Apparatus according to one or more of Claims 30 to 33, **characterized in that** the treatment elements (1,2) are arranged in flat form next to each other into stacks with an alternating sequence of first and second treatment elements.

35. Apparatus according to one or more of Claims 31 to 33, **characterized in that** at least one pair of a first treatment element (1) and a second treatment element (2) is wound spirally around a winding axis (A) perpendicular to the edges closed by folding or positively joining and essentially parallel to the direction taken by the housing (35) between the inlet arrangement (34) and outlet arrangement (35).

36. Apparatus according to one or more of Claims 1 to 35, **characterized in that** the at least one membrane is made from cellulose, polyamide, polytetrafluoroethylene, or polyvinylidene fluoride, or modifications, blends, mixtures, or copolymers thereof.

37. Apparatus according to one or more of Claims 1 to 36, **characterized in that** groups acting in a substance-specific manner are immobilized on and/or in the at least one membrane.

38. Apparatus according to Claim 37, **characterized in that** the groups acting in a substance-specific manner are ligands for affinity separation of ligates from a liquid to be treated.

39. Apparatus according to Claim 38, **characterized in that** the ligands are coupled to the membrane via molecules of long-chain linear polymers, where the molecules of the long-chain linear polymers carry a plurality of ligands.

40. Apparatus according to Claim 37, **characterized in that** the groups acting in a substance-specific manner are catalysts.

41. Process for substance-specific treatment of a fluid (33) using an apparatus according to Claim 1, comprising at least the steps of:
a) Introducing the fluid (33) to be treated into the distribution space via the inlet arrangement (34) of the housing (35),
b) Feeding of at least a portion of the fluid (33) to be treated from the distribution space into the cavities (6) of the first treatment elements (1) of a group of treatment elements (1,2) and penetrating the walls (13) of the first treatment elements (1), whereby a substance-specific treatment of the fluid takes place,
c) Passing out of the fluid after substance-specific treatment from the walls (13) of the first treatment elements (1),
d) Feeding of at least a portion of the fluid after substance-specific treatment in the first treatment elements (1) into, and penetrating, the walls (14) of the second treatment elements (2) of the group, whereby a substance-specific treatment of the fluid penetrating the walls (14) of the second treatment elements (2) takes place,
e) Passing out of the fluid after substance-specific treatment in the second treatment elements (2) from the cavities (10) of the second treatment elements (2),
f) Collecting the treated fluid in the collection space,
g) Removing the treated fluid (37) via the outlet arrangement (38) of the housing (35).

42. Process according to Claim 41, **characterized in that** steps b) through d) are performed multiple times.

43. Process according to Claim 42, **characterized in that** the treatment of the fluid is conducted in a plurality of groups of treatment elements (1,2) arranged as stages (32) that are arranged spatially in series in the direction of the flow through the housing (35).

44. Process according to Claim 43, **characterized in that** up to 100 stages (32) are arranged in series.

45. Process according to Claim 44, **characterized in that** up to 10 stages (32) are arranged in series.

46. Process according to one or more of Claims 41 to 45, **characterized in that** a plurality of housings (35) with treatment elements (1,2) arranged therein are connected in series.

47. Process according to one or more of Claims 41 to 46, **characterized in that** the fluid to be treated is recirculated.

48. Process for cleaning/separation of ligates from a ligatecontaining liquid by affinity, **characterized in that** at least one membrane is used on and/or in which ligands for said ligates are immobilized, and the process is conducted according to one or more of Claims 41 to 47.

49. Process for catalytic treatment of fluids, **characterized in that** at least one membrane is used on and/or in which catalysts are immobilized and the process is conducted according to one or more of Claims 41 to 47.

50. Use of the apparatus according to one or more of Claims 38 or 39 for separation/cleaning of ligates from a liquid containing these ligates.

51. Use of the apparatus according to Claim 40 for conducting catalytic reactions on target substances contained in fluids.

## Revendications

1. Dispositif pour le traitement spécifique d'un fluide (33) comprenant :
• une enceinte (35),
• un dispositif d'entrée (34) pour introduire le fluide (33) à traiter dans l'enceinte (35), dans une chambre de répartition,
• un dispositif de sortie (38) pour évacuer le fluide traité (37) de l'enceinte (35), depuis une chambre collectrice,
• au moins un premier élément de traitement (1) et au moins un deuxième élément de traitement (2) pour le traitement spécifique du fluide, chaque élément traitement comportant une extrémité (3, 7) tournée vers le dispositif d'entrée (34) et une extrémité (4, 9) tournée vers le dispositif de sortie (38),
le premier élément de traitement (1), au nombre d'au moins un, présentant au moins une cavité (6) délimitée par ses parois (13), ouverte en direction du dispositif d'entrée (34), mais fermée en direction du dispositif de sortie (38), et le deuxième élément de traitement (2), au nombre d'au moins, présentant au moins une cavité (10) délimitée par ses parois (14), ouverte en direction du dispositif de sortie (38), mais fermée en direction du dispositif d'entrée (34),
les parois (13, 14) des élément de traitement (1, 2) étant au moins partiellement formées d'au moins une membrane semi-perméable dotée d'une structure poreuse, **caractérisé en ce que** les éléments de traitement (1,2) sont regroupés en au moins un groupe de premiers et deuxièmes éléments de traitement mutuellement contigus essentiellement transversalement à la direction longitudinale de l'enceinte (35), entre le dispositif d'entrée (34) et le dispositif de sortie (38), les éléments de traitement regroupés en un groupe formant un étage (32) et le coefficient de remplissage ε de l'enceinte (35) à l'intérieur d'un étage (32) étant compris entre 0,6 et 0,999, le coefficient de remplissage ε étant défini par V_{B}/(V_{B}+V_{Z}), avec V_{B} la somme des volumes V_{b} des éléments de traitement (1, 2) contenus dans l'étage (32) et V_{Z} le volume de l'espace intermédiaire formé entre les éléments de traitement (1, 2) de l'étage (32) et entre les éléments de traitement (1, 2) de l'étage (32) et la paroi intérieure de l'enceinte, **en ce que** les extrémités des éléments de traitement sont dégagées par rapport à une masse de scellement qui entoure les extrémités de tous les éléments de traitement d'un groupe, **en ce que** la chambre de répartition est délimitée uniquement par l'enceinte (35), le dispositif d'entrée (34) et les extrémités (3, 7) tournées vers le dispositif d'entrée (34) du groupe d'éléments de traitement voisin du dispositif d'entrée (34), **en ce que** la chambre de collecte est délimitée uniquement par l'enceinte (35), le dispositif de sortie (38) et les extrémités (4, 9) tournées vers le dispositif de sortie (38) du groupe d'éléments de traitement voisin du dispositif de sortie (38).

2. Dispositif selon la revendication 1, **caractérisé en ce que** le groupe au nombre d'au moins un contient des paires de premiers et deuxièmes éléments de traitement (1, 2).

3. Dispositif selon une ou plusieurs des revendications 1 ou 2, **caractérisé en ce que** les extrémités (3, 7) tournées vers le dispositif d'entrée (34) et les extrémités (4, 9) tournées vers le dispositif de sortie (38) des éléments de traitement (1, 2) formant un groupe sont situées chacune essentiellement dans un plan perpendiculaire au tronçon longitudinal de l'enceinte (35), entre le dispositif d'entrée (34) et le dispositif de sortie (38).

4. Dispositif selon une ou plusieurs des revendications 1 à 3, **caractérisé en ce que** plusieurs groupes d'éléments de traitement (1, 2) sont disposés en tant qu'étages, les uns à la suite des autres dans l'enceinte (35), dans la direction longitudinale de l'enceinte (35) entre le dispositif d'entrée (34) et le dispositif de sortie (38).

5. Dispositif selon la revendication 4, **caractérisé en ce que** jusqu'à 100 étages (32) sont disposés les uns à la suite des autres.

6. Dispositif selon la revendication 5, **caractérisé en ce que** jusqu'à 10 étages (32) sont disposés les uns à la suite des autres.

7. Dispositif selon une ou plusieurs des revendications 4 à 6, **caractérisé en ce que** les étages sont espacés les uns des autres.

8. Dispositif selon une ou plusieurs des revendications 1 à 7, **caractérisé en ce qu'**au moins un élément de traitement présente un rapport V_{w}/V_{b} du volume de ses parois V_{w} au volume V_{b} formé du volume V_{w} de ses parois et du volume Vₕ de sa cavité, au nombre d'au moins une, qui est compris entre 0,4 et 0,9, les grandeurs V_{w} Vₕ et V_{b} se rapportant aux volume des parois, volume de cavité et volume total d'un élément de traitement isolé.

9. Dispositif selon la revendication 8, **caractérisé en ce que** le rapport V_{w}/V_{b} se situe entre 0,6 et 0,8.

10. Dispositif selon une ou plusieurs des revendications 1 à 9, **caractérisé en ce que** le coefficient de remplissage se situe entre 0,95 et 0,999.

11. Dispositif selon une ou plusieurs des revendications 1 à 10, **caractérisé en ce qu'**au moins une cavité présente un rapport dimensionnel L/D de sa dimension L dans la direction longitudinale de l'enceinte (35), entre l'élément d'entrée (34) et l'élément de sortie (38), au diamètre hydraulique D de sa section droite qui est compris entre 2 et 4000.

12. Dispositif selon la revendication 11, **caractérisé en ce que** le rapport dimensionnel est compris entre 10 et 400.

13. Dispositif selon une ou plusieurs des revendications 1 à 12, **caractérisé en ce que** les parois (13, 14) de chaque élément de traitement (1, 2) présentent une épaisseur essentiellement constante.

14. Dispositif selon une ou plusieurs des revendications 1 à 13, **caractérisé en ce que** la membrane semi-perméable, au nombre d'au moins une, présente un diamètre moyen de pores qui est compris entre 0,01 µm et 10 µm.

15. Dispositif selon la revendication 14, **caractérisé en ce que** la membrane semi-perméable, au nombre d'au moins une, présente un diamètre moyen de pores qui est compris entre 0, 1 µm et 3 µm.

16. Dispositif selon une ou plusieurs des revendications 1 à 15, **caractérisé en ce que** la membrane présente une porosité moyenne comprise entre 50% du volume et 90% du volume.

17. Dispositif selon une ou plusieurs des revendications 1 à 16, **caractérisé en ce que** la membrane présente une surface BET comprise entre entre 2 et 300 m² par cm³ de volume de membrane

18. Dispositif selon la revendication 17, **caractérisé en ce que** la membrane présente une surface BET comprise entre 8 et 30 m² par cm³ de volume de membrane.

19. Dispositif selon une ou plusieurs des revendications 1 à 18, **caractérisé en ce que** la membrane est une membrane à fibres creuses et que la paroi (13, 14) de la membrane à fibres creuses est la paroi de la cavité (6, 10) et que la membrane à fibres creuses est fermée à une extrémité (4, 7).

20. Dispositif selon la revendication 19, **caractérisé en ce que** les membranes à fibres creuses d'un groupe d'éléments de traitement disposés les uns à côté des autres sont liées au moyen de fils textiles pour former au moins un mat de fibres creuses avec des membranes à fibres creuses qui sont essentiellement mutuellement parallèles.

21. Dispositif selon la revendication 20, **caractérisé en ce que** le mat de fibres creuses, au nombre d'au moins un, est un mat tissé.

22. Dispositif selon la revendication 20, **caractérisé en ce que** le mat de fibres creuses, au nombre d'au moins un, est un tricoté.

23. Dispositif selon la revendication 20, **caractérisé en ce que** le mat de fibres creuses, au nombre d'au moins un, est une bandelette tissée.

24. Dispositif selon une ou plusieurs des revendications 20 à 23, **caractérisé en ce que** les membranes à fibres creuses aux cavités (6, 10) ouvertes d'un côté seulement, sont liées dans le mat de fibres creuses de manière telle que les ouvertures (12, 15) des cavités (6, 10) de membrane à fibres creuses contigues soient disposées sur des côtés opposés.

25. Dispositif selon la revendication 24, **caractérisé en ce qu'**au moins un mat de fibres creuses est enroulé en spirale autour d'un axe d'enroulement, qui est essentiellement parallèle aux membranes à fibres et au tronçon longitudinal de l'enceinte (35), entre le dispositif d'entrée (34) et le dispositif de sortie (38).

26. Dispositif selon la revendication 24, **caractérisé en ce que** plusieurs mats de fibres creuses sont empilés les uns sur les autres pour former des piles de couches indépendantes de mat ou des couches de mat pliées, les membranes à fibres creuses, dans la pile ainsi formée, étant de préférence mutuellement parallèles.

27. Dispositif selon une ou plusieurs des revendications 20 à 23, **caractérisé en ce que** les membranes à fibres creuses aux cavités (6, 10) ouvertes d'un côté seulement, sont liées dans le mat de fibres creuses de manière telle, que les ouvertures de toutes les cavités soient disposées du même côté.

28. Dispositif selon la revendication 27, **caractérisé: en ce que** plusieurs mats de fibres creuses sont empilés en couches les uns sur les autres de manière telle, que les extrémités fermées des membranes à fibres creuses de couche en couche soient en alternance sur des côtés opposés de la pile.

29. Dispositif selon la revendication 27, **caractérisé par** au moins une paire de mats de fibres creuses, les mats de fibres creuses d'une paire étant disposés les uns sur les autres de manière telle, que les ouvertures des membranes à fibres creuses du premier mat et les ouvertures des fibres creuses du deuxième mat soient situées sur des côtés opposés, et la paire au nombre d'au moins une étant enroulée en spirale autour d'un axe d'enroulement qui est essentiellement parallèle aux membranes à fibres et à au tronçon longitudinal de l'enceinte (35), entre le dispositif d'entrée (34) et le dispositif de sortie (38).

30. Dispositif selon une ou plusieurs des revendications 1 à 18, **caractérisé en ce que** les éléments de traitement (1, 2) sont formés d'au moins une membrane plane.

31. Dispositif selon la revendications 30, **caractérisé en ce que** les éléments de traitement (1,2 ) sont formés de membranes planes pliées en U, les branches (16, 17) de la membrane plane pliée en U étant maintenues écartées par des éléments d'espacement (18), aux fins de former la cavité (6, 10), le pli formé, dans les premiers éléments de traitement (1), étant disposé en direction du dispositif de sortie (38) et le pli formé, dans les deuxièmes éléments de traitement (2), étant disposé en direction du dispositif d'entrée (34).

32. Dispositif selon la revendications 30, **caractérisé en ce que** les éléments de traitement (1, 2) sont formés de deux membranes planes de mêmes dimensions, essentiellement parallèles l'une à l'autre, maintenues écartées l'une de l'autre par des éléments d'espacement (18), qui sont disposées l'une par rapport à l'autre de manière telle, que leurs bords soient mutuellement parallèles et qui sont liées par engagement positif au niveau d'un bord, le bord lié par engagement positif de premiers éléments de traitement (1) étant orienté en direction du dispositif de sortie (38) et le bord lié par engagement positif de deuxièmes éléments de traitement (2) étant orienté en direction du dispositif d'entrée (34).

33. Dispositif selon la revendication 32, **caractérisé en ce que** les éléments de traitement (1, 2) sont formés d'une membrane plane (25) et d'un film (24) non perméable aux fluides.

34. Dispositif selon une ou plusieurs des revendications 30 à 33, **caractérisé en ce que** les éléments de traitement (1, 2) plans sont disposés les uns à côté des autres en des piles avec une alternance de premiers éléments de traitement et de deuxièmes éléments de traitement.

35. Dispositif selon une ou plusieurs des revendications 31 à 33, **caractérisé en ce qu'**au moins une paire formée d'un premier élément de traitement (1) et d'un deuxième élément de traitement (2) est enroulée en spirale autour d'un axe d'enroulement (A), qui est essentiellement parallèle aux bords fermés, obtenus par pliage ou par liaison à engagement positif, et à la direction du tronçon d'enceinte, entre le dispositif d'entrée (34) et le dispositif de sortie (35).

36. Dispositif selon une ou plusieurs des revendications 1 à 35, **caractérisé en ce que** la membrane, au nombre d'au moins une, est en cellulose, polyamide, polytetrafluoroéthylène ou en poly(fluorure de vinylidène) ou des produits de modification, des alliages, des mélanges ou des copolymères de ceux-ci.

37. Dispositif selon une ou plusieurs des revendications 1 à 36, **caractérisé en ce que** des groupes ayant une activité spécifique sont immobilisés sur et/ou dans la membrane au nombre d'au moins une.

38. Dispositif selon la revendication 37, **caractérisé en ce que** les groupes ayant une activité spécifique sont des ligands pour la séparation par affinité de partenaires de liaison dans une liquide à traiter.

39. Dispositif selon la revendication 38, **caractérisé en ce que** les ligands sont couplés à la membrane par des molécules de polymères linéaires à chaîne longue, les molécules des polymères linéaires à chaîne longue portant plusieurs ligands ;

40. Dispositif selon la revendication 37, **caractérisé en ce que** les groupes ayant une activité spécifique sont des catalyseurs.

41. Procédé pour le traitement spécifique d'un fluide (33) en utilisant un dispositif selon la revendication 1, comprenant au moins les étapes suivantes :
a) introduction du fluide à traiter (33) dans la chambre de répartition par l'intermédiaire du dispositif d'entrée (34) de l'enceinte (35,
b) entrée d'au moins une partie du fluide à traiter (33) de la chambre de répartition dans les cavités (6) des premiers éléments de traitement (1) d'un groupe d'éléments de traitement (1, 2) et passage à travers les parois (13) desdits premiers éléments (1), un traitement spécifique du fluide ayant lieu,
c) sortie du fluide ainsi traité spécifiquement des premiers éléments de traitement (1) et des parois (13) de ceux-ci,
d) entrée d'au moins une partie du fluide traité dans les premiers éléments de traitement (1) dans les parois (14) des deuxièmes éléments de traitement (2) du groupe et passage à travers les parois (14), un traitement spécifique du fluide traversant les parois (14) du deuxième élément de traitement (2) ayant lieu,
e) sortie hors des cavités (10) des deuxièmes éléments de traitement (2) du fluide traité de manière spécifique dans lesdits deuxièmes éléments de traitement (2),
f) collecte du fluide traité dans la chambre de collecte,
g) évacuation du fluide traité (37) via le dispositif de sortie (38) de l'enceinte (35).

42. Procédé selon la revendication 41, **caractérisé en ce que** les étapes b) à d) sont répétées plusieurs fois.

43. Procédé selon la revendication 42, **caractérisé en ce que** le traitement du fluide a lieu dans plusieurs groupes d'éléments de traitement (1, 2), qui sont disposés les uns derrière les autres dans l'espace, en tant qu'étages (32), dans la direction de circulation dans l'enceinte (35).

44. Procédé selon la revendication 43, **caractérisé en ce que** jusqu'à 100 étages (32) sont disposés les uns à la suite des autres.

45. Procédé selon la revendication 43, **caractérisé en ce que** jusqu'à 10 étages (32) sont disposés les uns à la suite des autres.

46. Procédé selon une ou plusieurs des revendications 41 à 45, **caractérisé en ce que** plusieurs enceintes (35) contenant des éléments de traitement (1, 2) sont connectées les unes à la suite des autres.

47. Procédé selon une ou plusieurs des revendications 41 à 46, **caractérisé en ce qu'**on remet en circulation le fluide à traiter.

48. Procédé de purification /séparation par affinité de partenaires de liaison dans un liquide contenant des partenaires de liaison, **caractérisé en ce qu'**on utilise au moins une membrane sur laquelle et/ou dans laquelle sont immobilisés des ligands pour lesdits partenaires de liaison et **en ce que** le procédé est mis en oeuvre conformément à une ou plusieurs des revendications 41 à 47.

49. Procédé pour le traitement catalytique de fluides **caractérisé en ce qu'**on utilise au moins une membrane sur laquelle et/ou dans laquelle des catalyseurs sont immobilisés et on met en oeuvre le procédé conformément à une ou plusieurs des revendications 41 à 47.

50. Utilisation du dispositif selon une ou plusieurs des revendications 38 ou 39 pour la séparation/purification de partenaires de liaison dans un liquide contenant lesdits partenaires de liaison.

51. Utilisation du dispositif selon la revendication 40 pour la réalisation de réactions catalytiques sur des substances cibles contenues dans des fluides.
